# EUROPÄISCHE PATENTSCHRIFT

(11) **EP 2 547 406 B1**
(45) Veröffentlichungstag und Bekanntmachung des Hinweises auf die Patenterteilung: **12.07.2017**
(21) Anmeldenummer: 11794482.7
(22) Anmeldetag: 12.12.2011
(51) Int. Cl.: A62C 99/00, F24F 3/16, B01D 53/04, B01D 53/047

(54) **INERTISIERUNGSVERFAHREN ZUR BRANDVERHÜTUNG UND/ODER FEUERLÖSCHUNG SOWIE INERTISIERUNGSANLAGE ZUR DURCHFÜHRUNG DES VERFAHRENS**
INERTING METHOD FOR FIRE PREVENTION AND/OR FIRE EXTINGUISHING AND INERTING INSTALLATION FOR CARRYING OUT THE METHOD
PROCÉDÉ D'INERTISATION POUR LA PRÉVENTION DES INCENDIES ET/OU L'EXTINCTION DES INCENDIES ET DISPOSITIF D'INERTISATION POUR LA MISE EN OEUVRE DU PROCÉDÉ

(30) Priorität: 10.12.2010 EP 10194584
(43) Veröffentlichungstag der Anmeldung: 23.01.2013
(73) Patentinhaber: Amrona AG, 6302 Zug (CH)
(72) Erfinder: EBERLEIN, Anselm, 30419 Hannover (DE); KERSTEN, Peter Uwe, Wietze 29323 (DE)
(74) Vertreter: Rupprecht, Kay
(86) Internationale Anmeldenummer: PCT/EP2011/072432
(87) Internationale Veröffentlichungsnummer: WO 2012/076721

(56) Entgegenhaltungen:
- EP-A1- 2 204 219
- EP-A1- 2 233 175
- DE-B3- 10 235 718

## Beschreibung

Die vorliegende Erfindung betrifft ein Inertisierungsverfahren zur Brandverhütung und/oder Feuerlöschung, bei welchem in der Raumatmosphäre eines umschlossenen Raumes ein vorgebbarer und im Vergleich zur normalen Umgebungsluft reduzierter Sauerstoffgehalt eingestellt und gehalten wird.

Die Erfindung betrifft ferner eine Inertisierungsanlage zum Einstellen und/oder Halten eines vorgebbaren und im Vergleich zur normalen Umgebungsluft reduzierten Sauerstoffgehalts in der Raumatmosphäre eines umschlossenen Raumes, wobei die Inertisierungsanlage ein Gasseparationssystem aufweist, mit welchem von einem Stickstoff und Sauerstoff enthaltenen Anfangs-Gasgemisch zumindest ein Teil des Sauerstoffs abgetrennt und auf diese Weise am Ausgang des Gasseparationssystems ein mit Stickstoff angereichertes Gasgemisch bereitgestellt wird, und wobei die Inertisierungsanlage ein Zuführleitungssystem aufweist zum Zuführen des mit Stickstoff angereicherten Gasgemisches zu dem umschlossenen Raum.

Bei einer Inertisierungsanlage der zuvor genannten Art handelt es sich insbesondere um eine Anlage zur Minderung des Risikos und zum Löschen von Bränden in einem zu überwachenden Schutzraum, wobei zur Brandverhütung bzw. Brandbekämpfung der Schutzraum dauerinertisiert wird. Die Wirkungsweise einer solchen Inertisierungsanlage beruht auf der Kenntnis, dass in umschlossenen Räumen der Brandgefahr dadurch begegnet werden kann, dass in dem betroffenen Bereich die Sauerstoffkonzentration im Normalfall auf einem Wert von beispielsweise etwa 12 bis 15 Vol.-% dauerhaft abgesenkt wird. Bei dieser Sauerstoffkonzentration können die meisten brennbaren Materialien nicht mehr brennen. Haupteinsatzgebiet sind insbesondere EDV-Bereiche, elektrische Schalt- und Verteilerräume, umschlossene Einrichtungen sowie Lagerbereiche mit hochwertigen Wirtschaftsgütern.

Aus der Druckschrift EP 2 204 219 A1 sind ein Verfahren sowie eine Vorrichtung der eingangs genannten Art bekannt. Hierbei kommt eine Rückführung zum Einsatz, um einen Teil der in einem umschlossenen Raum enthaltenen Raumluft dem zu schützenden Raum zu entnehmen und einer Mischkammer zuzuführen. In dieser Mischkammer wird dem entnommenen Teil der Raumluft Frischluft zugemischt. Das auf diese Weise bereitgestellte Gasgemisch (Anfangs-Gasgemisch) wird einem Kompressor zugeführt, dort komprimiert und anschließend zu einem Stickstoffgenerator geleitet. In diesem Stickstoffgenerator wird zumindest ein Teil des Sauerstoffs aus dem bereitgestellten Anfangs-Gasgemisch abgetrennt und auf diese Weise am Ausgang des Stickstoffgenerators ein mit Stickstoff angereichertes Gasgemisch bereitgestellt. Dieses mit Stickstoff angereicherte Gasgemisch wird anschließend in den umschlossenen Raum geleitet, um dort die Sauerstoffkonzentration der Raumluftatmosphäre auf ein vorgegebenes Inertisierungsniveau abzusenken oder auf einem bereits eingestellten Inertisierungsniveau zu halten.

Das bei der Druckschrift EP 2 204 219 A1 zum Einsatz kommende Verfahren der Rückführung der sauerstoffreduzierten Atmosphäre im Brandschutz zur effektiveren Stickstoffgenerierung setzt in der Praxis ein an das zum Einsatz kommende Gasseparationssystem möglichst optimal angepasstes Rückführungsverfahren voraus. Insbesondere ist Sorge zu tragen, dass das in der Mischkammer bereitgestellte Anfangs-Gasgemisch stets in einem für das zum Einsatz kommende Gasseparationssystem optimalen Zustand vorliegt. Diese Anforderung kommt insbesondere dann zur Geltung, wenn als Gasseparationssystem mehrere Stickstoffgeneratoren mit jeweils einem zugeordneten Kompressor zum Einsatz kommen. Insbesondere dann ist Sorge zu tragen, dass das jeweilige Ansaugverhalten eines jeden einzelnen Stickstoffgenerators rückwirkungsfrei für alle anderen Stickstoffgeneratoren erfolgt. Hierbei ist zu berücksichtigen, dass ein Stickstoffgenerator, bei welchem zur Gasseparation eine Membrantechnik zum Einsatz kommt, ein konstantes Ansaugverhalten zeigt. Kommt hingegen ein Stickstoffgenerator zum Einsatz, bei welchem zur Gasseparation die oben beschriebene PSA-Technologie oder die oben beschriebene VPSA-Technologie zum Einsatz kommt, ist zu berücksichtigen, dass das Ansaugverhalten eines derartigen Stickstoffgenerators pulsartig erfolgen kann.

Insbesondere bei großvolumigen Räumen, wie etwa Lagerhallen, ist es häufig erwünscht, dass zum Einstellen und Halten eines vorgegebenen bzw. vorgebbaren Inertisierungsniveaus parallel mehrere Stickstoffgeneratoren zum Einsatz kommen, wobei bei diesen Stickstoffgeneratoren unter Umständen unterschiedliche Technologien zur Gasseparation verwendet werden. In solch einem Fall ist eine aufwändige und für jeden Stickstoffgenerator eigenständige Rückführungslinie aus dem umschlossenen Raum zu jedem Stickstoffgenerator hin erforderlich, um den optimalen Betrieb des Stickstoffgenerators sicherzustellen. Diese Anforderung führt zu einem relativ komplexen Aufbau der Inertisierungsanlage.

Ausgehend von dieser Problemstellung, liegt der vorliegenden Erfindung die Aufgabe zugrunde, die aus der Druckschrift EP 2 204 219 A1 bekannte Inertisierungsanlage bzw. das aus der Druckschrift EP 2 204 219 A1 bekannte Inertisierungsverfahren derart weiterzubilden, dass in einer möglichst einfachen aber effizienten Weise in dem umschlossenen Raum ein vorab festgelegtes Inertisierungsniveau eingestellt und aufrechterhalten werden kann.

Gemäß einem ersten Aspekt der Erfindung ist im Hinblick auf das Inertisierungsverfahren vorgesehen, dass in einer Mischkammer ein Anfangs-Gasgemisch bereitgestellt wird, welches Sauerstoff, Stickstoff und ggf. weitere Komponenten aufweist, wobei aus diesem bereitgestellten Anfangs-Gasgemisch in einem Gasseparationssystem zumindest ein Teil des Sauerstoffes abgetrennt und auf diese Weise am Ausgang des Gasseparationssystems ein mit Stickstoff angereichertes Gasgemisch bereit gestellt wird, und wobei dieses mit Stickstoff angereicherte Gasgemisch in die Raumatmosphäre des umschlossenen Raumes geleitet wird. Zum Bereitstellen des Anfangs-Gasgemisches ist ein den umschlossenen Raum mit der Mischkammer verbindendes Rückführleitungssystem vorgesehen, wobei weiterhin eine Ventilatoreinrichtung vorgesehen ist, welche einen Teil der in dem umschlossenen Raum enthaltenen Raumluft in geregelter Weise dem Raum entnimmt und der Mischkammer zuführt, wobei dem entnommenen Teil der Raumluft mit Hilfe einer in einem mit der Mischkammer verbundenen Frischluft-Zuführleitungssystem vorgesehenen Ventilatoreinrichtung in geregelter Weise Frischluft zugemischt wird.

Gemäß einem weiteren Aspekt der Erfindung ist in Bezug auf das Verfahren vorgesehen, dass die in dem Rückführleitungssystem vorgesehene Ventilatoreinrichtung derart angesteuert wird, dass die pro ZeitEinheit dem Raum entnommene und der Mischkammer zugeführte Menge an Raumluft derart eingestellt wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Gemäß einem weiteren Aspekt der Erfindung ist im Bezug auf das Verfahren vorgesehen, dass die in dem Frischluft-Zufuhrleitungssystem vorgesehene Ventilatoreinrichtung derart angesteuert wird, dass die pro Zeiteinheit dem entnommenen Teil der Raumluft zugemischte Menge an Frischluft derart eingestellt wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Gemäß einem weiteren Aspekt der Erfindung ist im Bezug auf die Inertisierungsanlage vorgesehen, dass die Inertisierungsanlage weiterhin eine Mischkammer, vorzugsweise eine als Mischrohr ausgebildete Mischkammer aufweist, welche zum Bereitstellen des Anfangs-Gasgemisches dient, wobei in der Mischkammer ein erstes Leitungssystem mündet, über welches ein Teil der in dem umschlossenen Raum enthaltenden Raumluft dem Raum entnommen und der Mischkammer zugeführt wird, und wobei in der Mischkammer ein zweites Leitungssystem mündet, über welches Frischluft der Mischkammer zugeführt wird.

Gemäß einem weiteren Aspekt der Erfindung ist im Hinblick auf die Inertisierungsanlage vorgesehen, dass die Inertisierungsanlage ferner in dem ersten Leitungssystem eine erste mit einer Steuereinrichtung ansteuerbare Ventilatoreinrichtung und in dem zweiten Leitungssystem eine zweite mit der Steuereinrichtung ansteuerbare Ventilatorrichtung aufweist.

Gemäß einem weiteren Aspekt der Erfindung ist im Hinblick auf die Inertisierungsanlage vorgesehen, dass bei einer Inertisierungsanlage, welche eine derartige Steuereinrichtung aufweist, die Steuereinrichtung dazu ausgelegt ist, die erste Ventilatoreinrichtung derart anzusteuern, dass sie mit Hilfe der ersten Ventilatoreinrichtung pro Zeiteinheit dem Raum entnommene und der Mischkammer zugeführte Menge an Raumluft derart eingestellt wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Gemäß einem weiteren Aspekt der Erfindung ist im Hinblick auf die Inertisierungsanlage vorgesehen, dass bei einer Inertisierungsanlage, welche eine Steuereinrichtung aufweist, die Steuereinrichtung dazu ausgelegt ist, die zweite Ventilatoreinrichtung derart anzusteuern, dass die mit Hilfe der zweiten Ventilatoreinrichtung pro Zeiteinheit dem entnommenen Teil der Raumluft zugemischte Menge an Frischluft derart eingestellt wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet.

Gemäß einem weiteren Aspekt der Erfindung ist im Hinblick auf die Inertisierungsanlage vorgesehen, dass die Inertisierungsanlage eine Steuereinrichtung aufweist, welche dazu ausgelegt ist, das Gasseparationssystem derart anzusteuern, dass der Sauerstoffrestgehalt des mit Stickstoff angereicherten Gasgemisches in Abhängigkeit von dem aktuell in der Raumatmosphäre des umschlossenen Raumes herrschenden Sauerstoffgehalt verändert wird.

Die bei dem Inertisierungsverfahren resultierende Präventions- bzw. Löschwirkung beruht dabei auf dem Prinzip der Sauerstoffverdrängung. Normale Umgebungsluft besteht bekanntlich zu etwa 21 Vol.-% aus Sauerstoff, zu etwa 78 Vol.-% aus Stickstoff und zu etwa 1 Vol.-% aus sonstigen Gasen. Um in einem Schutzraum das Risiko der Entstehung eines Brandes wirksam verringen zu können, wird die Sauerstoffkonzentration in dem betreffenden Raum durch Einleiten von Inertgas, wie beispielsweise Stickstoff, verringert. Im Hinblick auf die Brandlöschung von den meisten Feststoffen ist es bekannt, dass eine Löschwirkung bereits dann einsetzt, wenn der Sauerstoffanteil unter 15 Vol.-% absinkt. Abhängig von den in dem Schutzraum vorhandenen brennbaren Materialien kann ein weiteres Absenken des Sauerstoffanteils auf beispielsweise 12 Vol.-% erforderlich sein. Demnach kann durch eine Dauerinertisierung des Schutzraumes auch das Risiko der Entstehung eines Brandes in dem Schutzraum in effektiver Weise vermindert werden.

Bei dem erfindungsgemäßen Verfahren bzw. Inertisierungsanlage wird die Erkenntnis ausgenutzt, dass die Stickstoff-Reinheit des am Ausgang des Gasseparationssystems bereitgestellten und mit Stickstoff angereicherten Gasgemisches bzw. der Sauerstoffrestgehalt des am Ausgang des Gasseparationssystems bereitgestellten und mit Stickstoff angereicherten Gasgemisches einen Einfluss auf die sogenannte "Absenkzeit" hat. Unter dem Begriff "Absenkzeit" ist die Zeitdauer zu verstehen, welche erforderlich ist, um in der Raumatmosphäre des umschlossenen Raumes ein vorgegebenes Inertisierungsniveau einzustellen.

Im Einzelnen wird vorliegend die Erkenntnis ausgenutzt, dass mit zunehmender Stickstoff-Reinheit der Luftfaktor des Gasseparationssystems exponentiell ansteigt.

Unter dem Begriff "Luftfaktor" ist das Verhältnis der pro Zeiteinheit dem Gasseparationssystem bereitgestellten Menge an Anfangs-Gasgemisch zur pro Zeiteinheit am Ausgang des Gasseparationssystems bereitgestellten Menge an mit Stickstoff angereichertem Gas zu verstehen. Bei einem Stickstofferzeuger ist üblicherweise die Stickstoff-Reinheit am Ausgang des Gasseparationssystems frei wählbar und kann am Stickstoffgenerator eingestellt werden. Dabei gilt grundsätzlich, dass die Betriebskosten des Stickstoffgenerators umso günstiger sind, je niedriger die eingestellte Stickstoff-Reinheit ausfällt. Dann nämlich kann mit vergleichsweise kurzer Laufzeit des Kompressors am Ausgang des Gasseparationssystems ein mit Stickstoff angereichertes Gasgemisch mit der eingestellten Stickstoff-Reinheit bereitgestellt werden.

Im Hinblick auf die bei der Inertisierung des Raumes anfallenden Betriebskosten der Inertisierungsanlage müssen jedoch weitere Faktoren berücksichtigt werden. Hierzu gehören insbesondere Spülfaktoren, um mit Hilfe des am Ausgang des Gasseparationssystems bereitgestellten und mit Stickstoff angereicherten Gasgemisches den Sauerstoff in der Raumatmosphäre des umschlossenen Raumes soweit zu verdrängen, dass das vorgegebene Inertisierungsniveau erreicht wird bzw. aufrechterhalten bleiben kann. Zu diesen Spülfaktoren gehören insbesondere die pro Zeiteinheit von dem Gasseparationssystem bereitstellbare Menge an mit Stickstoff angereichertem Gas, das Raumvolumen des umschlossenen Raumes und die Differenz zwischen dem aktuell in der Raumatmosphäre des umschlossenen Raumes herrschenden Sauerstoffgehalt und dem Sauerstoffgehalt, der dem vorgegebenen Inertisierungsniveau entspricht. Hierbei ist zu berücksichtigen, dass im Hinblick auf die Absenkzeit die Stickstoff-Reinheit des am Ausgang des Gasseparationssystems bereitgestellten Gasgemisches bzw. der Sauerstoffrestgehalt des mit Stickstoff angereicherten Gasgemisches ebenfalls eine entscheidende Rolle spielt, da der Spülvorgang schneller von statten geht, je geringer der Sauerstoffrestgehalt in dem mit Stickstoff angereicherten Gasgemisch ist.

Unter dem hier verwendeten Begriff "Gasseparationssystem" ist ein System zu verstehen, mit dem aus einem Anfangs-Gasgemisch, welches zumindest die Komponenten "Sauerstoff" und "Stickstoff" aufweist, eine Aufteilung in mit Sauerstoff angereichertes Gas sowie in mit Stickstoff angereichertes Gas erfolgen kann. Üblicherweise basiert die Funktionsweise eines derartigen Gasseparationssystems auf der Wirkung von Gasseparationsmembranen. Das bei der vorliegenden Erfindung zum Einsatz kommende Gasseparationssystem ist in der ersten Linie zur Abscheidung von Sauerstoff aus dem Anfangs-Gasgemisch konzipiert. Ein derartiges Gasseparationssystem wird häufig auch als "Stickstoffgenerator" bezeichnet.

Bei einem derartigen Gasseparationssystem kommt beispielsweise ein Membranmodul oder dergleichen zum Einsatz, in welchem die verschiedenen in dem Anfangs-Gasgemisch enthaltenen Komponenten (wie beispielsweise Sauerstoff, Stickstoff, Edelgase etc.) entsprechend ihrer molekularen Struktur unterschiedlich schnell durch die Membrane diffundieren. Als Membrane kann eine Hohlfasermembrane zum Einsatz kommen. Sauerstoff, Kohlendioxid und Wasserstoff haben einen hohen Diffusionsgrad und verlassen aufgrund dessen bei der Durchströmung des Membranmoduls das Anfangs-Gasgemisch relativ schnell. Stickstoff mit einem niedrigen Diffusionsgrad durchdringt die Hohlfasermembrane des Membranmoduls sehr langsam und reichert sich auf diese Weise beim Durchströmen der Hohlfaser bzw. des Membranmoduls an. Die Stickstoff-Reinheit bzw. der Sauerstoffrestgehalt in dem aus dem Gasseparationssystem austretenden Gasgemisch wird von der Durchströmgeschwindigkeit bestimmt. Durch die Variation von Druck und Volumenstrom lässt sich das Gasseparationssystem auf die geforderte Stickstoff-Reinheit und nötige Stickstoffmenge einstellen. Im Einzelnen wird die Reinheit des Stickstoffes wird durch die Geschwindigkeit, mit der das Gas durch die Membrane strömt (Verweilzeit), geregelt.

Das abgeschiedene, mit Sauerstoff angereicherte Gasgemisch wird üblicherweise gesammelt und unter atmosphärischem Druck in die Umgebung abgeblasen. Das komprimierte, mit Stickstoff angereicherte Gasgemisch wird am Ausgang des Gasseparationssystems bereitgestellt. Bei der Analyse der Produktgas-Zusammensetzung erfolgt die Messung über den Sauerstoffrestgehalt in Vol.-%. Der Stickstoffgehalt wird berechnet, indem der gemessene Sauerstoffrestgehalt von 100 % abgezogen wird. Dabei ist zu berücksichtigen, dass dieser Wert zwar als Stickstoffgehalt bzw. Stickstoff-Reinheit bezeichnet wird, es sich aber faktisch um den Inertgehalt handelt, da sich dieser Teilstrom nicht nur aus Stickstoff, sondern auch aus anderen Gaskomponenten, wie beispielsweise Edelgasen, zusammensetzt.

Üblicherweise wird das Gasseparationssystem bzw. der Stickstoffgenerator mit Druckluft gespeist, die von vorgeschalteten Filtereinheiten gereinigt wird. Grundsätzlich ist es möglich, zur Bereitstellung des mit Stickstoff angereicherten Gases ein Druckwechselverfahren (PSA-Technologie) anzuwenden, das mit zwei Molekularsiebbetten arbeitet, wobei beide Siebe abwechselnd von einem Filtermodus in einen Regenerationsmodus geschaltet werden, wodurch der Strom von mit Stickstoff angereichertem Gas gewährt wird.

Solange ein kontinuierlicher Strom von mit Stickstoff angereichertem Gas am Ausgang eines mit Druckwechselverfahren arbeitenden Stickstoffgenerators nicht zwingend erforderlich ist, kann auch lediglich ein einziges Molekularsiebbett zum Einsatz kommen, welches abwechselnd durch Druckbeaufschlagung in einen Adsorptionszustand versetzt wird, währenddessen am Ausgang das mit Stickstoff angereicherte Gas zur Verfügung gestellt wird, und anschließend in einen Desorptionszustand auf niedrigerem Druck versetzt wird, während welchem die im Bereich des Molekularsiebbettes dann vorliegender mit Sauerstoff angereicherte Luft fortgespült werden kann.

Wenn beispielsweise im Stickstoffgenerator eine Membrantechnik zum Einsatz kommt, wird die allgemeine Erkenntnis ausgenutzt, dass verschiedene Gase unterschiedlich schnell durch Materialien diffundieren. Beim Stickstoffgenerator werden in diesem Fall die unterschiedlichen Diffusionsgeschwindigkeiten der Hauptbestandteile der Luft, nämlich Stickstoff, Sauerstoff und Wasserdampf, technisch zur Erzeugung eines Stickstoffstromes bzw. einer mit Stickstoff angereicherten Luft genutzt. Im Einzelnen wird zur technischen Realisierung eines auf der Membrantechnik basierenden Stickstoffgenerators auf die Außenflächen von Hohlfasermembranen ein Separationsmaterial aufgebracht, durch welches Wasserdampf und Sauerstoff sehr gut diffundieren. Der Stickstoff hingegen besitzt für dieses Separationsmaterial nur eine geringe Diffusionsgeschwindigkeit. Wird die derart präparierte Hohlfaser innen von Luft durchströmt, diffundieren Wasserdampf und Sauerstoff schnell durch die Hohlfaserwandung nach außen, während der Stickstoff weitgehend im Faserinneren gehalten wird, so dass während des Durchganges durch die Hohlfaser eine starke Aufkonzentration des Stickstoffes stattfindet. Die Effektivität dieses Trennungsvorganges ist im Wesentlichen von der Strömungsgeschwindigkeit in der Faser und der Druckdifferenz über die Hohlfaserwandung hinweg abhängig. Mit sinkender Strömungsgeschwindigkeit und/oder höherer Druckdifferenz zwischen Innen- und Außenseite der Hohlfasermembran steigt die Reinheit des resultierenden Stickstoffstromes an. Allgemein ausgedrückt kann somit bei einem auf der Membrantechnik basierenden Stickstoffgenerator der Grad der Stickstoffanreicherung in der vom Stickstoffgenerator bereitgestellten mit Stickstoff angereicherten Luft in Abhängigkeit von der Verweilzeit der von der Druckluftquelle bereitgestellten Druckluft in dem Luftseparationssystem des Stickstoffgenerators gesteuert werden.

Wenn andererseits beispielsweise im Stickstoffgenerator die PSA-Technik zum Einsatz kommt, werden unterschiedliche Bindungsgeschwindigkeiten des Luftsauerstoffes und Luftstickstoffes an speziell behandelter Aktivkohle ausgenutzt. Dabei ist die Struktur der verwendeten Aktivkohle so verändert, dass eine extrem große Oberfläche mit einer großen Anzahl von Mikro- und Submikroporen (d < 1 nm) vorhanden ist. Bei dieser Porengröße diffundieren die Sauerstoffmoleküle der Luft wesentlich schneller in die Poren hinein, als die Stickstoffmoleküle, so dass sich die Luft in der Umgebung der Aktivkohle mit Stickstoff anreichert. Bei einem auf der PSA-Technik basierenden Stickstoffgenerator kann daher - wie auch bei einem auf der Membrantechnik basierenden Generator - der Grad der Stickstoffanreicherung in der vom Stickstoffgenerator bereitgestellten mit Stickstoff angereicherten Luft in Abhängigkeit von der Verweilzeit der von der Druckluftquelle bereitgestellten Druckluft in dem Stickstoffgenerators gesteuert werden.

Wie bereits beschrieben, müssen derartige Stickstoffgeneratoren, welche die PSA-Technik einsetzen, wechselweise in einem Adsorptionsmodus und einem Desorptionsmodus betrieben werden, wobei während des Adsorptionsmodus (Filtermodus) eine Druckbeaufschlagung des Molekularsiebbettes erfolgen muss, um eine für das Generationsverfahren ausreichende Diffusion von Sauerstoffmolekülen in die Poren der Aktivkohle (Kohlenstoffgranulat, CMS) zu gewährleisten. Gegenüber dem im Vergleich zum Umgebungsdruck erhöhten Siebbettdruck während dieser Adsorptionsphase wird der Druck während der anschließenden Desorptionsphase (Spülphase bzw. Regenerationsphase) reduziert, um ein effektives Spülen des Kohlenstoffgranulates zu ermöglichen.

Bei Standard-PSA-Stickstoffgeneratoren, welche aus diesem Grund auch als Druckwechseladsorptionsgeneratoren bezeichnet werden, wird während des Regenerationszyklus (Desorptionsphase) ein Druckniveau verwendet, welches im Wesentlichen dem Umgebungsdruck entspricht. Im Verhältnis zu diesem Standard-Druckwechseladsorptionsgeneratoren aufwendiger ausgebildet sind sogenannte Vakuum-Druckwechseladsorptionsgeneratoren (VPSA-Technik), welche den Desorptionsvorgang dadurch intensivieren bzw. verkürzen, dass nicht lediglich ein Druckabbau auf Umgebungsdruckniveau stattfindet, sondern aktiv im Bereich des zu regenerierenden Molekularsiebbettes ein im Verhältnis zum Umgebungsdruck reduzierter Druck in Richtung Vakuumdruckniveau aufgebaut wird. Hierzu ist es dann erforderlich, dass neben dem durch den Kompressor zur Verfügung gestellten erhöhten Druckniveau auch ein entsprechend in Richtung Vakuumdruckniveau reduzierter Druck bereitgestellt wird, wozu in der Regel eine Vakuumquelle erforderlich ist. Eine derartige Vakuumquelle kann beispielsweise in Form einer Vakuumpumpe ausgebildet sein.

Wie bereits angedeutet, wird bei der erfindungsgemäßen Lösung die Erkenntnis ausgenutzt, einerseits dass mit zunehmender Stickstoff-Reinheit der Luftfaktor des Gasseparationssystems exponentiell ansteigt, und andererseits dass zum Einstellen eines vorgegebenen Inertisierungsniveaus die zum Einsatz kommenden Kompressoren der Inertisierungsanlage um so länger laufen müssen, je geringer die Differenz zwischen dem in der Raumatmosphäre des umschlossenen Raumes aktuell herrschenden Sauerstoffgehalt und dem Sauerstoffrestgehalt in dem mit Stickstoff angereichertem Gasgemisch ist. Hierbei ist zu berücksichtigen, dass der Zeitdauer des Absenkvorganges eines zu inertisierenden Raumes, sei es für die Halteregelung des Raumes bei einem festen Restsauerstoffgehalt oder während des Absenkens auf ein neues Absenkungsniveau, der Energieverbrauch der Inertisierungsanlage nahezu direkt proportional ist, da der dem Gasseparationssystem vorgeschaltete Kompressor auf seinem Arbeitspunkt mit optimalen Wirkungsgrad digital gefahren wird.

Demnach bleibt festzuhalten, dass - wenn für die Stickstoff-Reinheit ein niedriger Wert von beispielsweise nur 90 Vol.-% gewählt wird - die Inertgasanlage zum Einstellen eines Inertisierungsniveaus relativ lange betrieben werden muss. Wird der Wert der Stickstoff-Reinheit beispielsweise auf 95 Vol.-% erhöht, erhöht sich ebenfalls die Differenz zwischen dem Sauerstoffgehalt des einzustellenden Inertisierungsniveaus und dem Sauerstoffrestgehalt des am Ausgang des Gasseparationssystems bereitgestellten Gasgemisches, was für sich genommen die zum Einstellen eines Inertisierungsniveaus notwendige Laufzeit des Kompressors und somit den Energieverbrauch der Inertisierungsanlage herabsetzt. Allerdings kommt hier noch der Umstand zum Tragen, dass sich bei Erhöhung der Stickstoff-Reinheit am Ausgang des Gasseparationssystems zwangsläufig auch der Luftfaktor erhöht. Im Hinblick auf die zum Einstellen eines Inertisierungsniveaus erforderliche Laufzeit des Kompressors bzw. den Energieverbrauch der Inertisierungsanlage wirkt sich dieser Umstand negativ aus. Dieser negative Einfluss überwiegt, wenn die durch Erhöhung der Stickstoff-Reinheit bedingte Zunahme des Luftfaktors merklich wird.

Entgegen den üblichen aus dem Stand der Technik bekannten Systemen, bei denen für die Stickstoff-Reinheit des Gasseparationssystems ein fester Wert gewählt wird, geht die vorliegende Erfindung von einer Inertisierungsanlage aus, bei welcher bei der Inertisierung des umschlossenen Raumes der Sauerstoffrestgehalt in dem am Ausgang des Gasseparationssystems bereitgestellten und mit Stickstoff angereicherten Gasgemisch an den aktuell in der Raumatmosphäre des umschlossenen Raumes herrschenden Sauerstoffgehalt vorzugsweise automatisch oder wahlweise automatisch angepasst wird, um auf diese Weise die Stickstoff-Reinheit des Gasseparationssystems auf einen zeitoptimierten Wert einzustellen.

Unter dem hier verwendeten Begriff "zeitoptimierter Wert der Stickstoff-Reinheit" ist die Stickstoff-Reinheit des Gasseparationssystems bzw. der Restsauerstoffgehalt in dem am Ausgang des Gasseparationssystems bereitgestellten und mit Stickstoff angereicherten Gasgemisches zu verstehen, mit welchem bei einer definierten Inertisierungsanlage, bei welcher die pro Zeiteinheit bereitstellbare Menge an mit Stickstoff angereichertem Gasgemisch konstant ist, die Zeitdauer für den Absenkvorgang von einem aktuellen Sauerstoffgehalt auf einen vorgegebenen und einem Inertisierungsniveau entsprechenden Sauerstoffgehalt ein Minimum annimmt.

Indem die pro Zeiteinheit dem Raum entnommene und der Mischkammer zugeführte Menge an Raumluft und/oder die pro Zeiteinheit dem entnommenen Teil der Raumluft zugemischte Menge an Frischluft derart eingestellt werden/wird, dass die Differenz zwischen dem in der Mischkammer herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet, ist sichergestellt, dass das am Ausgang der Mischkammer bereitgestellte Anfangs-Gasgemisch stets in einem definierten und an das Gasseparationssystem optimal angepassten Zustand vorliegt. Die erfindungsgemäße Lösung erlaubt es insbesondere, dass bei dem Gasseparationssystem mehrere Stickstoffgeneratoren zum Einsatz kommen, wobei diesen mehreren Stickstoffgeneratoren auch unterschiedliche Technologien zur Gasseparation zu Grunde liegen können. Insbesondere ist mit der erfindungsgemäßen Lösung sichergestellt, dass das jeweilige Ansaugverhalten der ggf. mehreren zum Einsatz kommenden Stickstoffgeneratoren rückwirkungsfrei für die Stickstoffgeneratoren erfolgt. Demzufolge ist es ohne Weiteres möglich, die erfindungsgemäße Lösung auch als Feuerlöschanlage bzw. als präventiven Brandschutz für großvolumige Räume, wie etwa Lagerhallen, einzusetzen, wenn dort mehrere und ggf. verschiedene Stickstoffgeneratoren zur Gasseparation eingesetzt werden, ohne dass für jeden Stickstoffgenerator eine aufwändige, eigenständige und geregelte Rückführungslinie aus dem Schutzraum zu dem betreffenden Stickstoffgenerator hin benötigt wird. Demgemäß vermeidet die in der erfindungsgemäßen Lösung vorgeschlagene angepasste Rückführungsmethode einen erhöhten Aufwand zur Realisierung der erfindungsgemäßen Inertisierungsanlage.

Durch die erfindungsgemäße Lösung ist es insbesondere auch bei relativ großvolumigen Räumen, wie etwa Lagerhallen, in einer einfach zu realisierenden aber dennoch effektiven Weise möglich, die bei der Inertisierung anfallenden Betriebskosten zu reduzieren.

Gemäß einem weiteren Aspekt der Erfindung ist vorgesehen, dass der obere Schwellwert für den Differenzdruck bei 1,0 mbar und vorzugsweise bei 0,5 mbar liegt, wobei der untere Schwellwert für den Differenzdruck vorzugsweise bei 0,0 mbar liegt. Indem die Differenz zwischen dem in der Mischkammer herrschenden Druck und dem Außenatmosphärendruck in diesem angegebenen Bereich eingestellt wird, ist stets sichergestellt, dass das jeweilige Ansaugverhalten der zum Einsatz kommenden Stickstoffgeneratoren (konstantes Ansaugverhalten bei einem Stickstoffgenerator, bei welchem zur Gasseparation die Membrantechnologie zum Einsatz kommt bzw. pulsartiges Ansaugverhalten bei einem Stickstoffgenerator, bei welchem zur Gasseparation die PSA- bzw. VPSA-Technologie zum Einsatz kommt) rückwirkungsfrei für den Stickstoffgenerator erfolgt. Selbstverständlich sind aber auch andere Werte für den oberen bzw. unteren Schwellwert denkbar.

Gemäß einem weiteren Aspekt der Erfindung ist vorgesehen, dass in einem ersten Leitungssystem, über welches in einer von der Steuereinrichtung geregelten Weise ein Teil der in dem umschlossenen Raum enthaltenen Raumluft dem Raum entnommen und der Mischkammer zugeführt wird, eine erste mit der Steuereinrichtung ansteuerbare Ventilatoreinrichtung vorgesehen ist. Ferner ist es von Vorteil, wenn in einem zweiten Leitungssystem, über welches in einer geregelten Weise Frischluft der Mischkammer zugeführt wird, eine zweite mit der Steuereinrichtung ansteuerbare Ventilatoreinrichtung vorgesehen ist. Die Steuereinrichtung sollte dabei ausgelegt sein, die erste und/oder zweite Ventilatoreinrichtung derart anzusteuern, dass die Menge der pro Zeiteinheit dem Raum entnommenen Raumluft identisch ist mit der Menge des mit Stickstoff angereicherten Gasgemisches, welche pro Zeiteinheit der Raumatmosphäre des umschlossenen Raumes zugeführt wird. Durch das Vorsehen der entsprechend ansteuerbaren Ventilatoreinrichtungen kann ferner in einer einfach zu realisierenden aber dennoch effektiven Weise die Differenz zwischen dem in der Mischkammer herrschenden Druck und dem Außenatmosphärendruck (mit einem gewissen Regelbereich) auf einem vorab festgelegten oder festlegbaren Wert gehalten werden. Somit kann sichergestellt werden, dass das Anfangs-Gasgemisch den jeweiligen zum Einsatz kommenden Stickstoffgeneratoren des Gasseparationssystems in einem optimal angepassten Zustand bereitgestellt wird.

Gemäß einem weiteren Aspekt der Erfindung wird die Menge der Frischluft, welche in der Mischkammer der dem Raum entnommenen Raumluft pro Zeiteinheit zugemischt wird, so gewählt, dass die Menge der pro Zeiteinheit dem Raum entnommenen Raumluft identisch ist mit der Menge des mit Stickstoff angereicherten Gasgemisches, welches pro Zeiteinheit in die Raumatmosphäre des umschlossenen Raumes geleitet wird. Hiermit wird sichergestellt, dass durch das Einleiten des mit Stickstoff angereicherten Gasgemisches in die Raumatmosphäre des umschlossenen Raumes bzw. durch das Abführen/Rückführen der Raumluft aus dem umschlossenen Raum kein Über- bzw. Unterdruck eingestellt wird.

Zum Bereitstellen des Anfangs-Gasgemisches ist gemäß einem weiteren Aspekt der Erfindung eine Mischstrecke vorgesehen, in welcher vorzugsweise über ein Y-Stück das erste Leitungssystem, über welches in geregelter Weise ein Teil der in dem umschlossenen Raum enthaltenen Raumluft dem Raum entnommen wird, und das zweite Leitungssystem, über welches in geregelter Weise Frischluft zugeführt wird, münden. Diese Mischstrecke ist entweder in der Mischkammer integriert oder der Mischkammer vorgeschaltet. Die Mischstrecke dient zum Vermischen der dem umschlossenen Raum entnommenen Raumluft mit der zugeführten Frischluft und ist - um eine optimale Durchmischung sicherstellen zu können - derart konfiguriert, dass sich in der Mischstrecke eine turbulente Strömung einstellt. Hierfür ist es denkbar, den effektiven Strömungsquerschnitt der Mischstrecke entsprechend zu reduzieren, derart, dass sich für die in die Mischstrecke eingeleitete Frischluft und die ebenfalls in die Mischstrecke eingeleitete rückgeführte Raumluft eine Strömungsgeschwindigkeit einstellt, die größer ist als die von der Reynolds-Zahl abhängige charakteristische Grenzgeschwindigkeit. Alternativ oder zusätzlich hierzu ist es denkbar, dass in der Mischstrecke Spoiler-Elemente vorgesehen sind, um eine turbulente Strömung in der Mischstrecke zu induzieren.

Bei der zuletzt genannten Ausführungsform, bei welcher zum turbulenten Vermischen der rückgeführten Raumluft und der zugeführten Frischluft eine in der Mischkammer integrierte oder der Mischkammer vorgeschaltete Mischstrecke vorgesehen ist, ist gemäß einem weiteren Aspekt der Erfindung vorgesehen, dass die Mischstrecke eine hinreichende Länge aufweist, um ein möglichst vollständiges und gleichmäßiges Vermischen der rückgeführten Raumluft und der zugeführten Frischluft bewirken zu können. Besonders bevorzugt hierbei ist es, wenn die Mischstrecke eine Länge aufweist, die mindestens das 5-fache des hydraulischen Durchmessers der Mischstrecke ist. Der hydraulische Durchmesser ist eine theoretische Größe, um Berechnungen an Rohren oder Kanälen mit nicht kreisförmigen Querschnitt durchzuführen. Mit diesem Term kann dann wie bei einem runden Rohr gerechnet werden. Er ist der Quotient aus dem vierfachen Strömungsquerschnitt und dem vom Fluid benetzten Umfang (ggf. innen und außen) eines Messquerschnitts.

Gemäß einem weiteren Aspekt der Erfindung ist vorgesehen, dass das Gasseparationssystem mindestens einen und vorzugsweise eine Vielzahl von Stickstoffgeneratoren mit jeweils einem zugeordneten und über ein Leitungssystem mit der Mischkammer verbundenen Kompressor aufweist. Bei jedem Stickstoffgenerator ist mit Hilfe der Steuereinrichtung der Sauerstoffrestgehalt des am Ausgang des Stickstoffgenerators bereitgestellten und mit Stickstoff angereicherten Gasgemisches einstellbar. Diese Realisierung eignet sich insbesondere als Raumschutz für einen großvolumigen Raum, wie etwa eine Lagerhalle.

Gemäß einem weiteren Aspekt der Erfindung ist vorgesehen, dass der mindestens eine Stickstoffgenerator bzw. mindestens einer der Vielzahl von Stickstoffgeneratoren des Gasseparationssystems als Vakuum-Druckwechseladsorptionsgenerator ausgebildet ist, d.h. mit anderen Worten nach der VPSA-Technologie arbeitet. Bei einem derartigen Vakuum-Druckwechseladsorptionsgenerator ist in diesem Falle zusätzlich ein Leitungssystem zwischen der Mischkammer und mindestens einem Eingang des Vakuum-Druckwechseladsorptionsgenerators vorgesehen. In dieses Leitungssystem ist ein ansteuerbares Zwischenventil eingeschaltet, welches eine Steuerverbindung zur Steuereinrichtung aufweist. Mit Hilfe der Steuereinrichtung kann somit eine ansteuerbare direkte Verbindung zwischen der Mischkammer und dem mindestens einen Eingang des Vakuum-Druckwechseladsorptionsgenerators hergestellt werden. Im Zusammenhang mit dem erfindungsgemäßen Verfahren ist es dann vorgesehen, dass während der Desorptionsphase des Vakuum-Druckwechseladsorptionsgenerators und beispielsweise einige Sekunden, bevor diese Desorptionsphase planmäßig endet, beispielsweise fünf Sekunden vor dem planmäßigen Ende der Desorptionsphase das Zwischenventil innerhalb des die Mischkammer und den Stickstoffgenerator verbindenden Leitungssystems von einer Geschlossenstellung in eine Durchlassstellung gebracht wird, so dass noch vor Ablauf der Desorptionsphase des Vakuum-Druckwechseladsorptionsgenerators die Mischkammer direkt mit dem mindestens einen Eingang des Vakuum-Druckwechseladsorptionsgenerators verbunden ist.

Gemäß einem weiteren Aspekt der Erfindung ist vorgesehen, dass ein als Vakuum-Druckwechseladsorptionsgenerator ausgebildeter Stickstoffgenerator des Gasseparationssystems mindestens einen Eingang aufweist, wobei der mindestens eine Eingang wahlweise über ein Leitungssystem mit der Druckseite eines Kompressors oder mit der Saugseite einer Vakuumquelle verbunden wird.

Gemäß einem weiteren Aspekt der Erfindung ist vorgesehen, dass bei einem als Vakuum-Druckwechseladsorptionsgenerator ausgebildeten Stickstoffgenerator des Gasseparationssystems mit mindestens einem Eingang der mindestens eine Eingang des Stickstoffgenerators während einer Desorptionsphase mit der Saugseite der Vakuumquelle verbunden wird.

Gemäß einem weiteren Aspekt der Erfindung ist vorgesehen, dass bei einem als Vakuum-Druckwechseladsorptionsgenerator ausgebildeten Stickstoffgenerator des Gasseparationssystems mindestens ein Eingang des Stickstoffgenerators wahlweise über ein Leitungssystem mit der Mischkammer verbunden wird.

Gemäß einem weiteren Aspekt der Erfindung ist vorgesehen, dass bei einem als Vakuum-Druckwechseladsorptionsgenerator ausgebildeten Stickstoffgenerator des Gasseparationssystems mit mindestens einem Eingang der mindestens eine Eingang des Stickstoffgenerators zum Beenden einer Desorptionsphase des Stickstoffgenerators über das Leitungssystem mit der Mischkammer verbunden wird.

Dadurch, dass während der Desorptionsphase an diesem Eingang des Vakuum-Druckwechseladsorptionsgenerators ein Unterdruck herrscht, gelangt dann noch vor Ende der Desorptionsphase selbsttätig stickstoffangereicherte Luft aus dem Mischbehälter in diesen Eingang des Vakuum-Druckwechseladsorptionsgenerators, welcher beispielsweise zu einem Kohlenstoffgranulat (CMS) enthaltenden Adsorptionsbett führt. Hierdurch erfolgt also eine passive Druckerhöhung in einem derartigen Adsorptionsbett (CMS-Behälter), so dass die Desorptionsphase dieses Druckwechseladsorptionsgenerators ohne zusätzlichen Energieaufwand passiv beendet werden kann, was im Vergleich zu herkömmlichen Lösungen Zeit und Energie spart. Ferner ist dann, wenn ein anschließender Umschaltvorgang des Druckwechseladsorptionsgenerators in einen sich anschließenden Adsorptionsbetrieb vorgesehen ist, durch eine derartige passive Druckerhöhung in dem Adsorptionsbett (CMS-Behälter) ein derartiger Umschaltvorgang des Vakuum-Druckwechseladsorptionsgenerators in den Adsorptionsbetrieb ohne die sonst erforderliche Kompressorlast möglich, um im Bereich des Adsorptionsbettes für den anschließenden Adsorptionsbetrieb wieder einen Druck zu erzeugen, der näher an dem anschließend während der Adsorptionsphase aufzubauenden Überdruck liegt. Dadurch ergibt sich, dass der dem Vakuum-Druckwechseladsorptionsgenerator zugeordnete Kompressor das Molekularsiebbett in kürzerer Zeit wieder auf Betriebsdruck bringen kann, woraus wiederum eine schneller einsetzende Stickstoffgeneration am Ausgang des Vakuum-Druckwechseladsorptionsgenerators resultiert. Ferner ergibt sich dadurch, dass bereits stickstoffangereicherte Luft aus der Mischkammer in Richtung Molekularsiebbett strömt, dass während der sich anschließenden Adsorptionsphase das Sauerstoffniveau von Beginn an niedriger liegt. Durch entsprechende Auslegung der Mischkammer, beispielsweise vorzugsweise als langes Mischrohr, ergeben sich wiederum die vorteilhaften, Druckschwankungen ausgleichenden Eigenschaften, so dass auch ein derartiger die Desorptionsphase des Vakuum-Druckwechseladsorptionsgenerators frühzeitig beendender Druckausgleichsvorgang keine Rückwirkungen auf beispielsweise andere der Vielzahl von Stickstoffgeneratoren hat. Mit anderen Worten ist weiterhin ein rückwirkungsfreier Betrieb aller zum Einsatz kommenden Stickstoffgeneratoren gewährleistet.

Im Hinblick auf die bei der erfindungsgemäßen Lösung zum Einsatz kommende Mischkammer ist es gemäß einem weiteren Aspekt der Erfindung vorgesehen, dass diese Mischkammer ein Volumen aufweist, welches von der Anzahl der bei der Inertisierungsanlage zum Einsatz kommenden Stickstoffgeneratoren und/oder von dem Prinzip abhängt, auf welchem die Funktionsweise des mindestens einen Stickstoffgenerators basiert. Insbesondere ist die Mischkammer im Hinblick auf ihr Volumen so zu wählen, dass das jeweilige Ansaugverhalten der zum Einsatz kommenden Stickstoffgeneratoren rückwirkungsfrei für alle Stickstoffgeneratoren erfolgt.

Gemäß einem weiteren Aspekt der Erfindung ist hierbei die Mischkammer ferner derart ausgelegt, dass die in der Mischkammer maximal auftretbare Strömungsgeschwindigkeit im Durchschnitt geringer als 0,1 m/s ist. Dies wird durch eine geeignete Wahl des hydraulischen Querschnitts der Mischkammer erreicht.

Gemäß einem weiteren Aspekt der Erfindung ist vorgesehen, dass der Sauerstoffrestgehalt des mit Stickstoff angereicherten Gasgemisches bzw. die Stickstoff-Reinheit des Gasseparationssystems vorzugsweise automatisch gemäß einer vorab ermittelten Kennlinie eingestellt wird.

Gemäß einem weiteren Aspekt der Erfindung ist vorgesehen, dass eine derartige Kennlinie den zeitoptimierten Verlauf des Sauerstoffrestgehaltes in dem mit Stickstoff angereicherten Gasgemisch gegenüber dem Sauerstoffgehalt in der Raumatmosphäre des umschlossenen Raumes angibt, gemäß welchem dem Inertisierungsverfahren innerhalb kürzester Zeit in der Raumatmosphäre des umschlossenen Raumes ein vorgebbaren und im Vergleich zur normalen Umgebungsluft reduzierter Sauerstoffgehalt einstellbar ist.

Hierbei sind unter dem Ausdruck "zeitoptimierter Verlauf des Sauerstoffrestgehaltes" die von dem Sauerstoffgehalt in der Raumatmosphäre des umschlossenen Raumes abhängigen zeitoptimierten Werte des Sauerstoffrestgehaltes zu verstehen. Wie bereits angedeutet, entspricht der zeitoptimierte Wert des Sauerstoffrestgehaltes dem Wert des Sauerstoffrestgehaltes, der bei dem Gasseparationssystem zu wählen ist, damit mit Hilfe des Inertisierungsverfahrens in der Raumatmosphäre des umschlossenen Raumes innerhalb kürzester Zeit ein vorgebbarer und im Vergleich zur normalen Umgebungsluft reduzierter Sauerstoffgehalt einstellbar ist.

Die Kennlinie, nach welcher der Sauerstoffrestgehalt abhängig von dem in der Raumatmosphäre des umschlossenen Raumes aktuell herrschenden Sauerstoffgehalt eingestellt wird, ist für das Gasseparationssystem bzw. die Inertisierungsanlage vorab ermittelt (gemessen oder berechnet) worden.

Da gemäß einem Aspekt der erfindungsgemäßen Lösung die Stickstoff-Reinheit des Gasseparationssystems bzw. der Sauerstoffrestgehalt in dem mit Stickstoff angereicherten Gasgemisch abhängig von dem in der Raumatmosphäre des umschlossenen Raumes aktuell herrschenden Sauerstoffgehalt eingestellt wird und gemäß einem weiteren Aspekt der erfindungsgemäßen Lösung die Stickstoff-Reinheit des Gasseperationssystems bzw. der Sauerstoffrestgehalt in dem mit Stickstoff angereicherten Gasgemisch automatisch abhängig von dem in der Raumatmosphäre des umschlossen Raumes aktuell herrschenden Sauerstoffgehalts eingestellt wird, um auf diese Weise mit möglichst geringen Betriebskosten eine Inertisierung des Raumes vornehmen zu können, ist es gemäß einem weiteren Aspekt der Erfindung vorgesehen, dass kontinuierlich oder zu vorgegebenen Zeiten und/oder Ereignissen der aktuelle Sauerstoffgehalt in der Raumatmosphäre des umschlossenen Raumes entweder direkt oder indirekt gemessen wird. Ferner ist es gemäß einem weitern Aspekt der Erfindung vorgesehen, dass wenn kontinuierlich oder zu vorgegebenen Zeiten und/oder Ereignissen der Sauerstoffrestgehalt in dem mit Stickstoff angereicherten Gasgemisch auf einen vorab festgelegten, zeitoptimierten Wert eingestellt wird. Dieser vorab festgelegte, zeitoptimierte Wert sollte einem Sauerstoffrestgehalt entsprechen, bei welchem mit dem Inertisierungsverfahren der Sauerstoffgehalt in der Raumatmosphäre des umschlossenen Raumes innerhalb kürzester Zeit um einen vorgegebenen Absenkungsbetrag auf den jeweils aktuellen Sauerstoffgehalt absenkbar ist.

Gemäß einem weiteren Aspekt der erfindungsgemäßen Lösung ist vorgesehen, dass nicht nur die Stickstoff-Reinheit des Gasseparationssystems abhängig von dem in der Raumatmosphäre des umschlossenen Raumes aktuell herrschenden Sauerstoffgehalt verändert wird, sondern dass auch der Sauerstoffgehalt in dem Anfangs-Gasgemisch abhängig von dem in der Raumatmosphäre des umschlossenen Raumes aktuell herrschenden Sauerstoffgehalt verändert wird. Hierbei wird die Kenntnis ausgenutzt, dass der Luftfaktor des Gasseparationssystems herabgesetzt werden kann, wenn das Anfangs-Gasgemisch, mit welchem das Gasseparationssystem versorgt wird, einen reduzierten Sauerstoffgehalt aufweist.

Demnach ist gemäß einem Aspekt der Erfindung vorgesehen, dass zum Bereitstellen des Anfangs-Gasgemisches ein Teil der in dem umschlossenen Raum enthaltenen Raumluft in geregelter Weise dem Raum entnommen und dem entnommenen Teil der Raumluft in geregelter Weise Frischluft zugeführt wird. Um dabei zu verhindern, dass sich der Druck im Inneren des umschlossenen Raumes durch die Zufuhr von mit Stickstoff angereichertem Gas bzw. durch das Abführen von einem Teil der Raumluft verändert, ist die Menge der Frischluft, die der dem Raum entnommenen Raumluft zugemischt wird, so gewählt, dass die Menge der pro Zeiteinheit dem Raum entnommenen Raumluft identisch ist mit der Menge des mit Stickstoff angereicherten Gasgemisches, welches am Ausgang des Gasseparationssystems bereitgestellt und pro Zeiteinheit in die Raumatmosphäre des umschlossenen Raumes geleitet wird.

Im Folgenden werden exemplarische Ausführungsformen der erfindungsgemäßen Inertisierungsanlage anhand der beigefügten Zeichnungen beschrieben.

Es zeigen:
- Fig. 1: eine schematische Ansicht einer Inertisierungsanlage gemäß einer ersten Ausführungsform der vorliegenden Erfindung;
- Fig. 2: eine schematische Ansicht einer Inertisierungsanlage gemäß einer zweiten Ausführungsform der vorliegenden Erfindung;
- Fig. 3: eine schematische Ansicht einer Inertisierungsanlage gemäß einer dritten Ausführungsform der vorliegenden Erfindung;
- Fig. 4: eine schematische Ansicht einer Inertisierungsanlage gemäß einer vierten Ausführungsform der vorliegenden Erfindung;
- Fig. 5: eine graphische Darstellung des Luftfaktors gegenüber der Stickstoff-Reinheit bei der Inertisierungsanlage gemäß Fig. 1, Fig. 2, Fig. 3 oder Fig. 4, sowie eine graphische Darstellung der Absenkzeit gegenüber der Stickstoff-Reinheit, und zwar bei der Absenkung des Sauerstoffgehaltes von ursprünglich 17,4 Vol.-% auf 17,0 Vol.-% sowie bei einer Absenkung des Sauerstoffgehaltes von ursprünglich 13,4 Vol.-% auf 13,0 Vol.-%;
- Fig. 6: eine graphische Darstellung der zeitoptimierten Stickstoff-Reinheit gegenüber dem aktuellen Sauerstoffgehalt in der Raumatmosphäre des umschlossenen Raumes bei der Inertisierungsanlage gemäß Fig. 1, Fig. 2, Fig. 3 oder Fig. 4;
- Fig. 7: eine graphische Darstellung des Luftfaktors des Gas-separationssystems bei der Inertisierungsanlage gemäß Fig. 1, Fig. 2, Fig. 3 oder Fig. 4 gegenüber dem Sauerstoffgehalt des AnfangsGasgemisches, welches dem Gasseparationssystem zugeführt wird, um zumindest ein Teil des Sauerstoffes aus dem Anfangs-Gasgemisch abzutrennen und auf diese Weise am Ausgang des Gas-separationssystems ein mit Stickstoff angereichertes Gasgemisch bereitzustellen;
- Fig. 8: eine graphische Darstellung der erzielbaren Energieeinsparungen, wenn mit der erfindungsgemäßen Lösung in der Raumatmosphäre des umschlossenen Raumes der Sauerstoffgehalt abgesenkt wird;
- Fig. 9: eine schematische Ansicht einer Inertisierungsanlage gemäß einer fünften Ausführungsform der vorliegenden Erfindung; und
- Fig. 10: eine schematische Ansicht einer Inertisierungsanlage gemäß einer sechsten Ausführungsform der vorliegenden Erfindung.

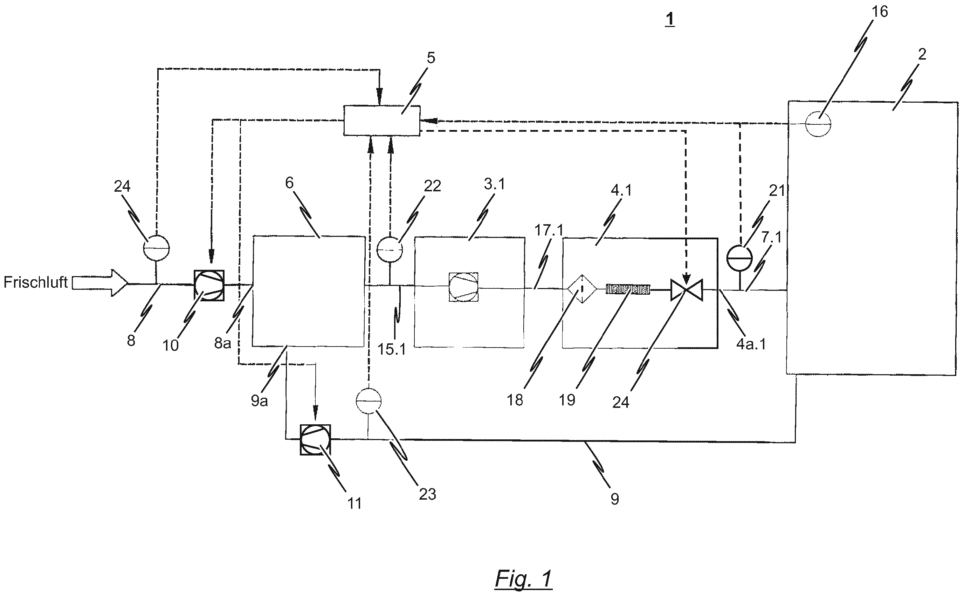

Fig. 1 zeigt in einer schematischen Darstellung einer ersten beispielhaften Ausführungsform einer Inertisierungsanlage 1 gemäß der vorliegenden Erfindung. Die dargestellte Inertisierungsanlage 1 dient zum Einstellen und Halten eines vorgebbaren Inertisierungsniveaus in der Raumatmosphäre eines umschlossenen Raumes 2. Der umschlossene Raum 2 kann beispielsweise eine Lagerhalle sein, bei welcher als präventive Brandschutzmaßnahme der Sauerstoffgehalt in der Raumluft auf ein bestimmtes Inertisierungsniveau von beispielsweise 12 Vol.-% oder 13 Vol.-% Sauerstoffgehalt abgesenkt und gehalten wird.

Die Inertisierung des umschlossenen Raumes 2 wird mit Hilfe einer Steuereinrichtung 5 wahlweise automatisch durchgeführt. Hierzu weist die Inertisierungsanlage 1 gemäß der in Fig. 1 dargestellten Ausführungsform ein Gasseparationssystem bestehend aus einem Kompressor 3.1 sowie einem Stickstoffgenerator 4.1 auf. Der Kompressor 3.1 dient dazu, dem Stickstoffgenerator 4.1 in komprimierter Weise ein Anfangs-Gasgemisch bereitzustellen, welches zumindest die Komponenten Sauerstoff und Stickstoff aufweist. Hierzu ist der Ausgang des Kompressors 3.1 über ein Leitungssystem 17.1 mit dem Eingang des Stickstoffgenerators 4.1 verbunden, um dem Stickstoffgenerator 4.1 mit dem komprimierten Anfangs-Gasgemisch zu versorgen. Denkbar ist es, dass am Ausgang des Kompressors 3.1 das Anfangs-Gasgemisch auf einen Druck von beispielsweise 7,5 bis 9,5 bar und vorzugsweise 8,8 bar komprimiert ist.

Der Stickstoffgenerator 4.1 weist mindestens ein Membranmodul 19, beispielsweise ein Hohlfasermembranmodul auf, durch welches das von dem Kompressor 3.1 bereitgestellte Anfangs-Gasgemisch - nachdem dieses einen geeigneten Filter 18 passiert hat - gedrückt wird. In dem Membranmodul 19 diffundieren die verschiedenen in dem Anfangs-Gasgemisch enthaltenden Komponenten (insbesondere Sauerstoff und Stickstoff) entsprechend ihrer molekularen Struktur unterschiedlich schnell durch die Hohlfasermembrane des Membranmoduls 19. Die Gasseparation basiert dabei auf dem an sich bekannten Wirkungsprinzip, wonach Stickstoff mit einem niedrigen Diffusionsgrad die Hohlfasermembrane sehr langsam durchdringt und sich auf diese Weise beim Durchströmen der Hohlfasern des Membranmoduls 19 anreichert. Am Ausgang 4a.1 des Stickstoffgenerators 4.1 wird auf diese Weise ein mit Stickstoff angereichertes Gasgemisch bereitgestellt. Dieses mit Stickstoff angereicherte Gasgemisch liegt - wie auch das am Eingang des Stickstoffgenerators 4.1 eingespeiste Anfangs-Gasgemisch - in komprimierter Form vor, wobei allerdings das Durchströmen des mindestens einen Membranmoduls 19 des Stickstoffgenerators 4.1 zu einem Druckverlust von beispielsweise 1,5 bis 2,5 bar führt.

Obwohl in Fig. 1 nicht explizit dargestellt, wird das im Stickstoffgenerator 4.1 abgeschiedene und mit Sauerstoff angereicherte Gasgemisch gesammelt und unter atmosphärischem Druck in die Umgebung abgeblasen.

Das am Ausgang 4a.1 des Stickstoffgenerators 4.1 bereitgestellte und mit Stickstoff angereicherte Gasgemisch wird über eine Zuführleitung 7.1 dem umschlossenen Raum 2 zugeführt, um den Sauerstoffgehalt in der Raumatmosphäre des umschlossenen Raumes 2 abzusenken bzw. um ein in dem Raum 2 bereits eingestelltes Absenkungsniveau durch Nachführen von mit Stickstoff angereichertem Gas aufrechtzuerhalten.

Damit sich der Druck im Inneren des umschlossenen Raumes 2 beim Zuführen von dem mit Stickstoff angereicherten Gasgemisch nicht ändert, kann eine geeignete Druckentlastung vorgesehen sein. Diese kann beispielsweise in Gestalt von sich selbstständig öffnenden bzw. schließenden Druckentlastungsklappen (in Fig. 1 nicht dargestellt) ausgeführt sein. Andererseits ist es aber auch denkbar, dass das bei der Inertisierung des Raumes 2 zum Zwecke der Druckentlastung abzuführende Raumluftvolumen über ein Rückführleitungssystem 9 einer Mischkammer 6 zugeführt wird.

Die aus dem umschlossenen Raum 2 abgeführte Raumluft wird über einen ersten Eingang 9a der Rückführleitung 9 der Mischkammer 6 zugeführt. Die Mischkammer 6 weist ferner einen zweiten Eingang 8a auf, in welchem ein Zufuhrleitungssystem 8 zum Zuführen von Frischluft zu der Mischkammer 6 mündet. In der Mischkammer 6 wird das Anfangs-Gasgemisch bereitgestellt, welches mit Hilfe des Kompressors 3.1 komprimiert wird, und aus welchem in dem Gasseparationssystem (Stickstoffgenerator 4.1) zumindest ein Teil des Sauerstoffs abgetrennt wird. Aus diesem Grund ist der Ausgang der Mischkammer 6 mit dem Eingang des Kompressors 3.1 über ein geeignetes Leitungssystem 15.1 verbunden.

Im Einzelnen ist in dem Rückführleitungssystem 9 eine erste mit der Steuereinrichtung 5 ansteuerbare Ventilatoreinrichtung 11 und in dem Frischluft-Zuführleitungssystem 8 eine zweite ebenfalls mit der Steuereinrichtung 5 ansteuerbare Ventilatoreinrichtung 10 vorgesehen. Auf diese Weise kann durch eine geeignete Ansteuerung der entsprechenden Ventilatoreinrichtungen 10, 11 sichergestellt werden, dass die Menge der Frischluft, die der dem Raum 2 entnommenen Raumluft zugemischt wird, so gewählt ist, dass die Menge der pro Zeiteinheit dem Raum 2 entnommenen Raumluft identisch ist mit der Menge des am Ausgang 4a.1 1 des Stickstoffgenerators 4.1 bereitgestellten und mit Stickstoff angereicherten Gasgemisches, welche pro Zeiteinheit in die Raumatmosphäre des umschlossenen Raumes 2 geleitet wird.

Die Inertisierungsanlage 1 gemäß der in Fig. 1 schematisch dargestellten Ausführungsform der vorliegenden Erfindung zeichnet sich dadurch aus, dass die bereits erwähnte Steuereinrichtung 5 mit den entsprechenden ansteuerbaren Komponenten der Inertisierungsanlage 1 verbunden und ausgelegt ist, automatisch den Stickstoffgenerator 4.1 bzw. das Gasseparationssystem derart anzusteuern, dass das am Ausgang 4a.1 des Gasseparationssystems bereitgestellte und mit Stickstoff angereicherte Gasgemisch einen Sauerstoffrestgehalt aufweist, der von dem in der Raumatmosphäre des umschlossenen Raumes 2 aktuell herrschenden Sauerstoffgehalt abhängt. Insbesondere wird bei der dargestellten bevorzugten Realisierung der erfindungsgemäßen Inertisierungsanlage 1 mit Hilfe der Steuereinrichtung 5 der Stickstoffgenerator 4.1 derart angesteuert, dass abhängig von dem mit Hilfe eines Sauerstoffmesssystems 16 gemessenen Sauerstoffgehalt in der Raumatmosphäre des umschlossenen Raumes 2 das mit Stickstoff angereicherte Gasgemisch einen Sauerstoffrestgehalt zwischen 10,00 Vol.-% bis 0,01 Vol.-% aufweist, wobei der Sauerstoffrestgehalt des mit Stickstoff angereicherten Gasgemisches mit abnehmendem Sauerstoffgehalt in der Raumatmosphäre des umschlossenen Raumes 2 abnimmt.

Hierzu weist die erfindungsgemäße Inertisierungsanlage 1 neben dem bereits erwähnten Sauerstoffmesssystem 16 zum Messen bzw. Ermitteln des aktuellen Sauerstoffgehaltes in der Raumatmosphäre des umschlossenen Raumes 2 ferner ein Sauerstoffrestgehalt-Messsystem 21 zum Messen des Sauerstoffrestgehaltes in dem am Ausgang 4a.1 des Stickstoffgenerators 4.1 bereitgestellten und mit Stickstoff angereicherten Gasgemisch bzw. zum Bestimmen der Stickstoff-Reinheit des am Ausgang 4a.1 des Stickstoffgenerators 4.1 bereitgestellten Gasgemisches auf. Beide Messsysteme 16, 21 sind mit der Steuereinrichtung 5 entsprechend verbunden.

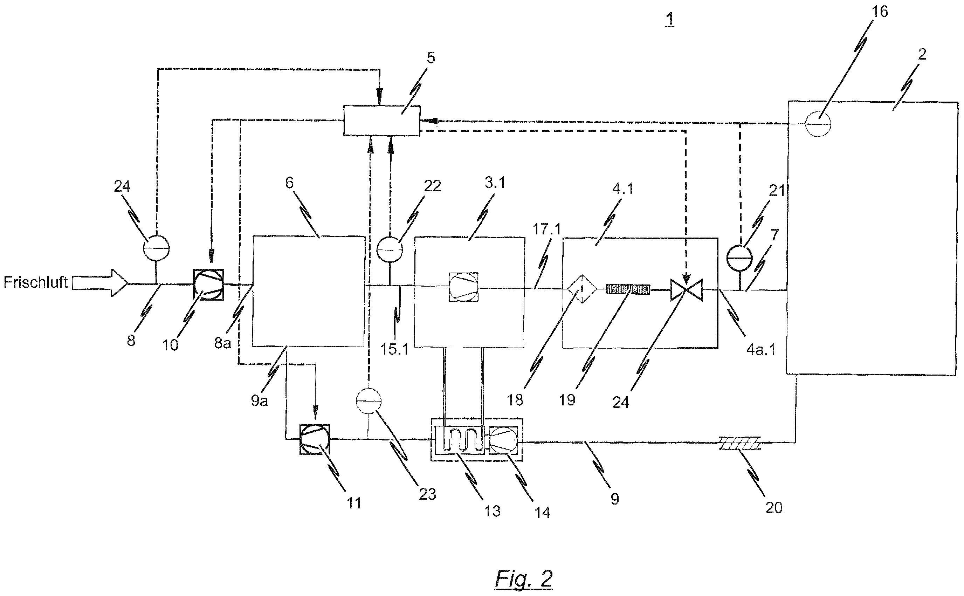

In Fig. 2 ist in einer schematischen Ansicht eine Inertisierungsanlage 1 gemäß einer zweiten Ausführungsform der vorliegenden Erfindung gezeigt. Die Inertisierungsanlage 1 gemäß der zweiten Ausführungsform eignet sich insbesondere dazu, in möglichst wirtschaftlicher Weise in einem klimatisierten Raum, wie etwa in einem Kühlraum oder in einer Kühllagerhalle, ein vorab festgelegtes Inertisierungsniveau einzustellen und aufrechtzuerhalten. Der Aufbau und die Funktionsweise der Inertisierungsanlage 1 gemäß der in Fig. 2 dargestellten Ausführungsform entsprechen im Wesentlichen dem Aufbau und der Funktionsweise der zuvor unter Bezugnahme auf Fig. 1 beschriebenen Inertisierungsanlage, so dass zur Vermeidung von Wiederholungen nachfolgend insbesondere auf die Unterschiede eingegangen werden soll.

Wie in Fig. 2 dargestellt, ist es für eine möglichst wirtschaftliche Inertisierung eines klimatisierten Raumes 2 bevorzugt, wenn in dem Rückführleitungssystem 9 zwischen dem Raum 2 und der Mischkammer 6 ein Wärmetauschersystem 13 vorgesehen ist. Ferner ist es von Vorteil, wenn - wie in Fig. 2 angedeutet - das Rückführleitungssystem 9 mit einer entsprechenden thermischen Isolierung 20 zumindest teilweise ummantelt, damit ein Vereisen des Rückführleitungssystems 9 vermieden werden kann, wenn die aus dem umschlossenen Raum 2 abgeführte, heruntergekühlte Raumluft über das Rückführleitungssystem 9 dem Wärmetauschersystem 13 zugeführt wird, bevor die Raumluft dann in die Mischkammer 6 geleitet wird. Das Wärmetauschersystem 13 kann bei Bedarf einen Stützventilator 14 aufweisen, damit die Raumluft ohne Druckverlust aus der Raumatmosphäre des umschlossenen Raumes 2 abgeführt werden kann.

Das Wärmetauschersystem 13 dient dazu, zumindest einen Teil der beim Betrieb des Kompressors 3.1 anfallenden Abwärme auszunutzen, um die abgeführte und heruntergekühlte Raumluft entsprechend aufzuwärmen. Für das Wärmetauschersystem 13 kommen unterschiedliche Systeme zum Einsatz, wie etwa ein Lamellenwärmetauscher, über den zumindest ein Teil der thermischen Energie des Abluft des Kompressors 3.1 über ein Wärmetauschermedium, wie beispielsweise Wasser, auf die abgeführten Raumluft übertragen wird, so dass die Temperatur der abgeführten Raumluft auf eine moderate Temperatur von beispielsweise 20° C aufzuwärmen, was für die Funktionsweise und den Wirkungsgrad des Stickstoffgenerators 4.1 von Vorteil ist.

Nachdem die aus dem umschlossenen Raum 2 abgeführte Raumluft das Wärmetauschersystem 13 passiert hat, wird sie über einen ersten Eingang 9a der Rückführleitung 9 der Mischkammer 6 zugeführt. Die Mischkammer 6 weist ferner einen zweiten Eingang 8a auf, in welchem ein Zufuhrleitungssystem 8 zum Zuführen von Frischluft zu der Mischkammer 6 mündet. In der Mischkammer 6 wird das Anfangs-Gasgemisch bereitgestellt, welches mit Hilfe des Kompressors 3.1 komprimiert wird, und aus welchem in dem Gasseparationssystem (Stickstoffgenerator 4.1) zumindest ein Teil des Sauerstoffs abgetrennt wird. Aus diesem Grund ist der Ausgang der Mischkammer 6 mit dem Eingang des Kompressors 3.1 über ein geeignetes Leitungssystem 15.1 verbunden.

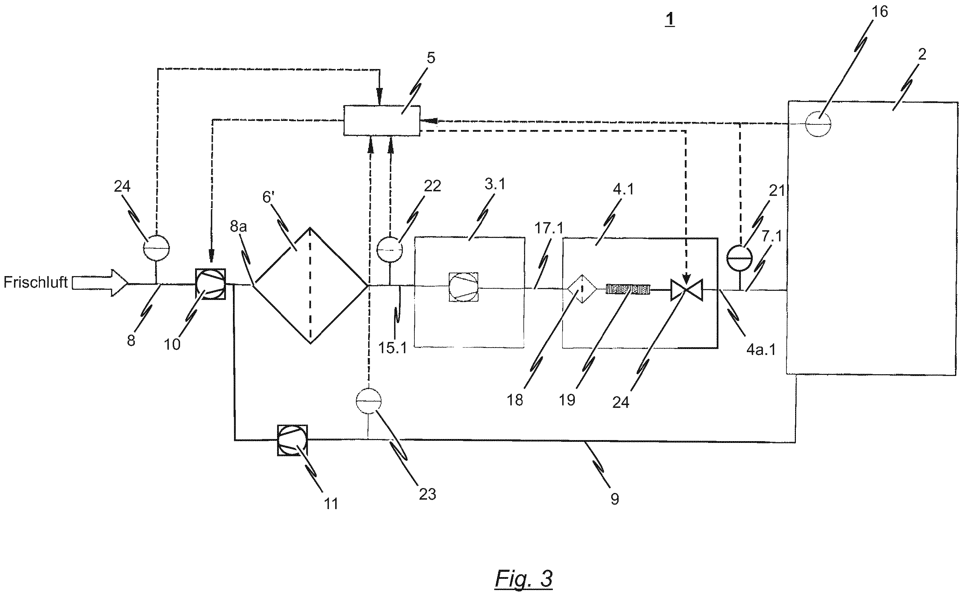

In Fig. 3 ist in einer schematischen Ansicht eine Inertisierungsanlage 1 gemäß einer dritten Ausführungsform der vorliegenden Erfindung gezeigt. Der Aufbau und die Funktionsweise der Inertisierungsanlage 1 gemäß der in Fig. 3 dargestellten Ausführungsform entsprechen im Wesentlichen dem Aufbau und der Funktionsweise der zuvor unter Bezugnahme auf Fig. 1 beschriebenen Inertisierungsanlage, so dass zur Vermeidung von Wiederholungen nachfolgend insbesondere auf die Unterschiede eingegangen werden soll.

Wie in Fig. 3 dargestellt, ist bei der dort dargestellten Ausführungsform die Mischkammer als Filter 6' realisiert. Die in Gestalt eines Filters 6' ausgeführte Mischkammer erfüllt demnach zwei Funktionen: Zum einen dient sie zum Bereitstellen des Anfangs-Gasgemisches, und zwar indem die über das Frischluft-Zuführleitungssystem zugeführte Frischluft mit der aus dem Raum 2 entnommenen und über das Rückführleitungssystem 9 zugeführten Raumluft vermischt wird. Zum anderen dient die als Filter 6' realisierte Mischkammer zum Filtern des bereitgestellten Anfangs-Gasgemisches, bevor dieses mit Hilfe des Kompressors 3.1 komprimiert wird. Somit kann auf einen zusätzlicher Filter am Eingang des Kompressors 3.1 verzichtet werden.

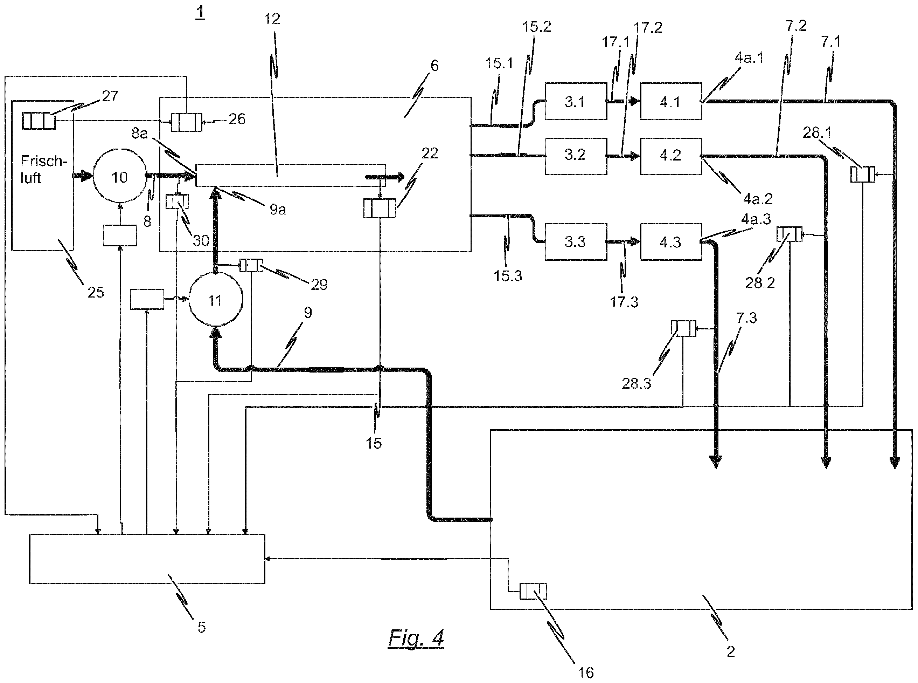

Nachfolgend wird unter Bezugnahme auf die Darstellung in Fig. 4 eine vierte exemplarische Ausführungsform der erfindungsgemäßen Inertisierungsanlage 1 beschrieben.

Der Aufbau und die Funktionsweise der Inertisierungsanlage 1 gemäß der vierten Ausführungsform sind im Wesentlichen identisch mit der zuvor unter Bezugnahme auf die Darstellung in Fig. 1 beschriebene Ausführungsform, allerdings kommen bei der Ausführungsform gemäß Fig. 4 mehrere parallel geschaltete Stickstoffgeneratoren 4.1, 4.2 und 4.3 zum Einsatz. Jedem Stickstoffgenerator 4.1, 4.2, 4.3 ist ein Kompressor 3.1, 3.2, 3.3 zugeordnet, welcher über ein entsprechendes Leitungssystem 15.1, 15.2, 15.3 mit der Mischkammer 6 verbunden ist, um das von dem zugehörigen Stickstoffgenerator 4.1, 4.2, 4.3 benötigte Anfangs-Gasgemisch aus der Mischkammer 6 abzusaugen und auf den für die optimale Betriebsweise des entsprechenden Stickstoffgenerators 4.1, 4.2, 4.3 notwendigen Druckwert zu komprimieren. Jeder bei der Inertisierungsanlage 1 gemäß der in Fig. 4 dargestellten Ausführungsform zum Einsatz kommende Stickstoffgenerator 4.1, 4.2, 4.3 ist über eine entsprechende Zuführleitung 7.1, 7.2, 7.3 mit dem umschlossenen Raum 2 verbunden. Demnach wird bei der in Fig. 4 dargestellten Ausführungsform das Gasseparationssystem durch die Komponenten "Stickstoffgenerator 4.1, 4.2, 4.3" und zugeordnetem "Kompressor 3.1, 3.2, 3.3" gebildet.

Wie auch bei den zuvor unter Bezugnahme auf die Darstellungen in den Figuren 1 bis 3 beschriebenen Ausführungsformen der erfindungsgemäßen Lösung kommt bei dem Ausführungsbeispiel gemäß Fig. 4 eine Rückführleitung 9 zum Einsatz. Wie dargestellt, ist in der Rückführleitung 9 eine erste Ventilatoreinrichtung 11 vorgesehen, welche von der Steuereinrichtung 5 entsprechend angesteuert werden kann, um in geregelter Weise einen Teil der Raumluft aus dem umschlossenen Raum 2 abzusaugen und der Mischkammer 6 zuzuführen. Ferner ist bei der in Fig. 4 dargestellten Ausführungsform eine Frischluft-Zuführleitung 8 vorgesehen, um Frischluft von einem Außenbereich 25 in geregelter Weise der Mischkammer 6 zuzuführen. Zu diesem Zweck ist in der Frischluft-Zuführleitung 8 eine mit der Steuereinrichtung 5 ansteuerbare zweite Ventilatoreinrichtung 10 vorgesehen.

Wie auch bei den zuvor beschriebenen Ausführungsbeispielen der erfindungsgemäßen Inertisierungsanlage 1 ist bei der in Fig. 4 dargestellten Ausführungsform eine Mischkammer 6 vorgesehen, um ein Anfangs-Gasgemisch bereitzustellen, welches Sauerstoff, Stickstoff und ggf. weitere Komponenten aufweist. Das in der Mischkammer 6 bereitgestellte Anfangs-Gasgemisch wird über entsprechende Leitungssysteme 15.1, 15.2, 15.3 den jeweiligen Kompressoren 3.1, 3.2, 3.3 des Gasseparationssystems zugeführt.

Damit das von der Mischkammer 6 bereitgestellte Anfangs-Gasgemisch in einem im Hinblick auf die jeweiligen zum Einsatz kommenden Stickstoffgeneratoren 4.1, 4.2, 4.3 optimalen Zustand vorliegt, ist bei der in Fig. 4 dargestellten Ausführungsform der erfindungsgemäßen Inertisierungsanlage 1 eine in der Mischkammer 6 integrierte Mischstrecke 12 vorgesehen. Diese Mischstrecke 12 muss nicht zwangsläufig in der Mischkammer 6 integriert sein, sondern kann auch der Mischkammer 6 vorgeschaltet sein.

Im Einzelnen mündet bei der in Fig. 4 gezeigten Ausführungsform die Rückführungsleitung 9 einerseits und die Frischluft-Zuführleitung 8 andererseits in dieser Mischstrecke 12. Obwohl in Fig. 4 nicht explizit dargestellt, ist es bevorzugt, wenn hierzu das Ende 9a der Rückführleitung 9 und das Ende 8a der Frischluft-Zuführleitung 8 über ein Y-Stück vorzugsweise am stromaufwärts liegenden Endbereich der Mischstrecke 12 in die Mischstrecke 12 münden.

Die Mischstrecke 12 dient zum optimalen Vermischen der über die Zuführleitung 8 zugeführten Frischluft mit der über die Rückführleitung 9 zugeführten Raumluft. Zu diesem Zweck ist es bevorzugt, wenn die Mischstrecke 12 derart dimensioniert ist, dass im Inneren der Mischstrecke 12 eine turbulente Strömung entsteht. Dies kann beispielsweise erreicht werden, indem der effektive Strömungsquerschnitt der Mischstrecke 12 derart reduziert wird, dass sich in der Mischstrecke 12 eine Strömungsgeschwindigkeit einstellt, welche größer als die für das Ausbilden einer turbulenten Strömung charakteristische und von der entsprechenden Reynolds-Zahl abhängige Grenzgeschwindigkeit ist. Alternativ oder zusätzlich hierzu ist es gleichwohl denkbar, innerhalb der Mischstrecke 12 geeignete Spoiler-Elemente vorzusehen, welche im in der Mischstrecke 12 eine turbulente Strömung induzieren.

Wie es der schematischen Darstellung in Fig. 4 entnommen werden kann, weist die Mischstrecke 12 eine hinreichende Länge auf, um ein optimales Durchmischen der am stromaufwärts liegenden Endbereich zugeführten Frisch- und Raumluft bis zum stromabwärts liegenden Endbereich der Mischstrecke erzielen zu können. Bei experimentellen Versuchen hat es sich gezeigt, dass es von Vorteil ist, wenn die Mischstrecke 12 eine Länge aufweist, die mindestens dem 5-fachen des effektiven Strömungsquerschnittes der Mischstrecke 12 entspricht.

Am stromabwärts liegenden Endbereich der Mischstrecke 12 wird die von dem umschlossenen Raum 2 über die Rückführleitung 9 zurückgeführte und in der Mischstrecke 12 mit der zugeführten Frischluft optimal durchmischte Raumluft in die Mischkammer 6 geleitet. Im Unterschied zu der Mischstrecke 12 weist die Mischkammer 6 einen deutlich vergrößerten effektiven Strömungsquerschnitt auf, um eine Strömungsberuhigung herbeiführen zu können. Insbesondere ist es notwendig, dass das in der Mischkammer 6 letztendlich bereitgestellte Anfangs-Gasgemisch stets in einem für die zum Einsatz kommenden Stickstoffgeneratoren 4.1, 4.2, 4.3 optimalen Zustand vorliegt. Dies bedeutet insbesondere, dass die Differenz zwischen dem in der Mischkammer 6 herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet. Darüber hinaus sollte die in der Mischkammer 6 maximal auftretbare Strömungsgeschwindigkeit im Durchschnitt geringer als 0,1 m/s sein.

Um diese im Hinblick auf das Anfangs-Gasgemisch zu beachtenden Bedingungen einhalten zu können, ist bei der in Fig. 4 dargestellten Ausführungsform der erfindungsgemäßen Inertisierungsanlage 1 im Inneren der Mischkammer 6 ein Drucksensor 26 vorgesehen. Mit diesem Drucksensor 26 wird kontinuierlich oder zu vorgegebenen Zeiten bzw. Ereignissen der im Inneren der Mischkammer 6 herrschende Druck gemessen und der Steuereinrichtung 5 zugeführt. Die Steuereinrichtung 5 vergleicht den in der Mischkammer 6 gemessenen Druckwert mit dem Druckwert der Außenatmosphäre und steuert in Abhängigkeit von dem Vergleich dieser beiden Druckwerte die erste und/oder zweite Ventilatoreinrichtung 11, 10 entsprechend an, um zu erreichen, dass die Differenz zwischen dem in der Mischkammer 6 herrschenden Druck und dem Außenatmosphärendruck den vorgegebenen oder vorgebbaren oberen Schwellwert nicht überschreitet und den vorgegebenen oder vorgebbaren unteren Schwellwert nicht unterschreitet. Der Vollständigkeit halber sei darauf hingewiesen, dass in dem Außenbereich 25 ein entsprechender Drucksensor 27 vorgesehen ist, um kontinuierlich oder zu vorgegebenen Zeiten bzw. Ereignissen den Druck im Außenbereich 25 zu erfassen und der Steuereinrichtung 5 zuzuführen. Alternativ könnte der Drucksensor 26 auch ein Differenzdrucksensor sein.

Bei der in Fig. 4 dargestellten Ausführungsform der erfindungsgemäßen Inertisierungsanlage 1 ist die Steuereinrichtung 5 ausgelegt, die erste Ventilatoreinrichtung 11 und/oder die zweite Ventilatoreinrichtung 10 derart anzusteuern, dass die Differenz zwischen dem in der Mischkammer 6 herrschenden Druck und dem Außenatmosphärendruck maximal 0,1 mbar und vorzugsweise maximal 0,5 mbar beträgt.

Wie es der Darstellung in Fig. 4 entnommen werden kann, kommen zum Zwecke der Gasseparation insgesamt drei Stickstoffgeneratoren 4.1, 4.2, 4.3 zum Einsatz. Denkbar hierbei ist es, dass die Stickstoffgeneratoren 4.1, 4.2, 4.3 teilweise oder jeweils auf einer unterschiedlichen Gasseparations-Technik basieren. So ist es beispielsweise denkbar, dass bei dem ersten Stickstoffgenerator 4.1 zur Gasseparation eine Trennmembran zum Einsatz kommt. Dann ist der dem ersten Stickstoffgenerator 4.1 zugeordnete Kompressor 3.1 entsprechend an den am Eingang des Stickstoffgenerators 4.1 anzulegenden Druck (z. B. 13 bar) anzupassen. Bei dem zweiten Stickstoffgenerator 4.2 kann zum Zwecke einer Gasseparation beispielsweise die PSA-Technik zum Einsatz kommen. In diesem Fall ist der zugeordnete Kompressor 3.2 entsprechend auszulegen, wobei dieser beispielsweise einen Ausgangsdruck von 8 bar zu liefern hat. Der weitere bei dem Ausführungsbeispiel gemäß Fig. 4 zum Einsatz kommende Stickstoffgenerator 4.3 kann beispielsweise ein Stickstoffgenerator sein, der auf der VPSA-Technik basiert. Dann ist der zugeordnete Kompressor 3.3 derart auszulegen, dass dieser an seinem Ausgang Niederdruck liefert.

Demnach kommt bei dem in Fig. 4 dargestellten Ausführungsbeispiel als Gasseparationssystem eine Kombination von verschiedenen Stickstoffgeneratoren 4.1, 4.2, 4.3 zum Einsatz, wobei die jeweiligen den Stickstoffgeneratoren 4.1, 4.2, 4.3 zugeordneten Kompressoren 3.1, 3.2, 3.3 an die entsprechende Funktionsweise des Stickstoffgenerators angepasst sind.

Um eine optimale Funktionsweise des Gasseparationssystems sicherstellen zu können, muss die Mischkammer 6 groß genug ausgebildet sein, damit bei Betrieb der einzelnen Kompressoren 3.1, 3.2, 3.3 keine unzulässigen Druckschwankungen auftreten und insbesondere keine Rückwirkungen auf die zum Einsatz kommenden Stickstoffgeneratoren 4.1, 4.2, 4.3 auftreten können. Wie bereits angedeutet, liegt der maximale Wert an zulässigen Druckschwankungen vorzugsweise bei 1,0 mbar und noch bevorzugter bei 0,5 mbar.

Obwohl in Fig. 4 nicht explizit dargestellt, ist es bevorzugt, wenn die jeweiligen Leitungssysteme 15.1, 15.2, 15.3, welche die entsprechenden Kompressoren 3.1, 3.2, 3.3 mit der Mischkammer 6 verbinden, über geeignet dimensionierte Ansaugöffnungen in die Mischkammer 6 münden, um eine direkte dynamische Beeinflussung der Ansaugströmungen verhindern zu können. Gleichermaßen sollten die Ansaugöffnungen entsprechend beabstandet voneinander positioniert sein.

Die Verwendung der zuvor beschriebenen speziellen Mischkammer 6 bzw. Mischstrecke 12 ist nicht auf die in Fig. 4 dargestellte Ausführungsform der erfindungsgemäßen Inertisierungsanlage 1 beschränkt. Vielmehr ist es sehr wohl denkbar, die in Fig. 4 gezeigte Mischkammer 6 bzw. Mischstrecke 12 auch bei den in den Figuren 1 bis 3 dargestellten Ausführungsformen einzusetzen, um die Betriebsweisen der Inertisierungsanlagen 1 zu optimieren.

Wie auch bei den zuvor beschriebenen Ausführungsformen der erfindungsgemäßen Inertisierungsanlage ist bei der Inertisierungsanlage 1 gemäß der Darstellung in Fig. 4 vorgesehen, dass der Sauerstoffgehalt des in der Mischkammer 6 bereitgestellten Anfangs-Gasgemisches kontinuierlich oder zu vorgegebenen Zeiten bzw. Ereignissen gemessen und der Messwert der Steuereinrichtung 5 zugeführt wird. Hierzu ist es von Vorteil, wenn am stromabwärts liegenden Endbereich der Mischstrecke 12 ein geeigneter Sauerstoffsensor 22 angeordnet ist.

Ferner ist es von Vorteil, ein Sauerstoffmesssystem in der Rückführleitung 9 vorzusehen. An Stelle eines Sauerstoffmesssystems in der Rückführleitung 9 kann allerdings auch der Sauerstoffgehalt in der Raumluft des umschlossenen Raumes 2 erfasst werden. Hierzu kommt bei der in Fig. 4 dargestellten Ausführungsform ein entsprechendes in dem Raum 2 vorgesehenes Sauerstoffmesssystem 16 zum Einsatz.

Bei der in Fig. 4 dargestellten Ausführungsform, bei welcher zur Gasseparation mehrere Stickstoffgeneratoren 4.1, 4.2, 4.3 zum Einsatz kommen, ist es bevorzugt, wenn die entsprechenden Volumenströme der von den jeweiligen Ausgängen 4a.1, 4a.2, 4a.3 der Stickstoffgeneratoren 4.1, 4.2, 4.3 zum umschlossenen Raum 2 geleiteten Gasströmungen erfasst werden. Wie dargestellt, kommen bei der in Fig. 4 gezeigten Ausführungsform hierzu geeignete Sensoren 28.1, 28.2, 28.3 zum Einsatz.

Darüber hinaus ist es von Vorteil, den Volumenstrom der Rückführung 9 mit Hilfe eines Volumenstromsensors 29, den Volumenstrom der Frischluftzufuhr 8 mit Hilfe eines Volumenstromsensors 30 und ggf. die Volumenströme der den einzelnen Kompressoren 3.1, 3.2, 3.3 zugeführten Anfangs-Gasgemische zu erfassen. Sämtliche Messwerte werden der Steuereinrichtung 5 zugeführt. Diese steuert die entsprechenden ansteuerbaren Komponenten der Inertisierungsanlage 1 geeignet an, um den Differenzdruck zwischen der Mischkammer 6 und dem Außenbereich 25 in dem zulässigen Regelbereich zu halten.

Des Weiteren ist bei der in Fig. 4 dargestellten Ausführungsform vorgesehen, dass mit Hilfe der Steuereinrichtung 5 der Sauerstoffrestgehalt bei jedem Stickstoffgenerator 4.1, 4.2, 4.3 eingestellt werden kann.

Bei einer bevorzugten Realisierung der in Fig. 4 schematisch dargestellten Inertisierungsanlage 1 kommen parallel 10 bis 11 VPSA-Stickstoffgeneratoren und 2 bis 4 Membran-Stickstoffgeneratoren zum Einsatz, wobei die Mischkammer eine Fläche von 10 m X 4,3 m aufweist.

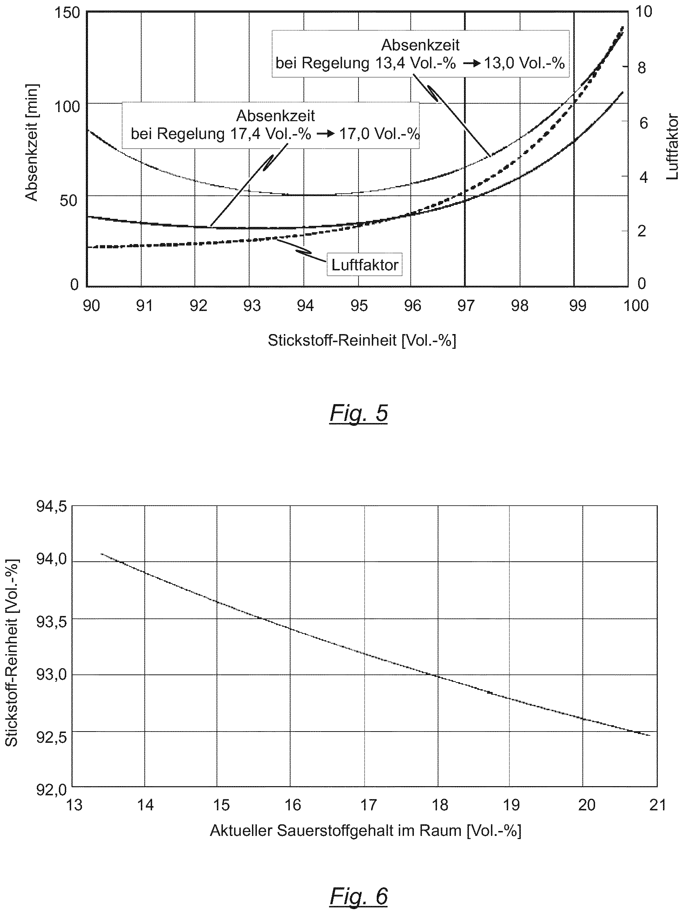

Wie es nachfolgend unter Bezugnahme auf die graphischen Darstellungen gemäß den Figuren 5 bis 7 im Einzelnen dargelegt wird, kann durch ein geeignetes Einstellen der Stickstoff-Reinheit des bzw. der zum Einsatz kommenden Stickstoffgeneratoren 4.1, 4.2, 4.3 bzw. durch ein geeignetes Einstellen des Sauerstoffrestgehaltes in dem am jeweiligen Ausgang 4a.1, 4a.2, 4a.3 des Gasseparationssystems bereitgestellten und mit Stickstoff angereicherten Gasgemisch in einer zeitoptimierten Weise ein vorgegebenes Absenkungsniveau in der Raumatmosphäre des umschlossenen Raumes 2 eingestellt werden. Demnach ist bei der erfindungsgemäßen Lösung vorgesehen, dass die Stickstoff-Reinheit des bzw. der zum Einsatz kommenden Stickstoffgeneratoren 4.1, 4.2, 4.3 bei der Inertisierung des umschlossenen Raumes 2 in Abhängigkeit von dem aktuellen Sauerstoffgehalt in der Raumatmosphäre des umschlossenen Raumes 2 eingestellt und angepasst wird.

Die Stickstoff-Reinheit kann verändert werden, indem die Verweilzeit des Anfangs-Gasgemisches in dem mindestens einen Membranmodul 19 des bzw. der zum Einsatz kommenden Stickstoffgeneratoren 4.1, 4.2, 4.3 variiert wird. Hierzu ist es beispielsweise denkbar, dass am Ausgang des Membranmoduls 19 mit einem geeigneten Regelventil 24 der Durchfluss durch das Membranmodul 19 und ein Gegendruck gesteuert werden. Ein hoher Druck auf der Membrane und eine lange Verweilzeit (niedriger Durchfluss) führen zu einer hohen Stickstoff-Reinheit am entsprechenden Ausgang 4a.1, 4a.2, 4a.3 des jeweiligen zum Einsatz kommenden Stickstoffgenerators 4.1, 4.2, 4.3.

Vorzugsweise wird für die jeweilige Stickstoff-Reinheit ein zeitoptimierter Wert gewählt, der es ermöglicht, dass mit der Inertisierungsanlage in kürzester Zeit ein vorab festgelegtes Inertisierungsniveau in dem umschlossenen Raum 2 eingestellt und gehalten werden kann. Durch Verwendung entsprechender zeitoptimierter Werte für die Stickstoff-Reinheit ist es beim Einstellen und Halten eines vorgegebenen Inertisierungsniveaus in der Raumatmosphäre des umschlossenen Raumes 2 möglich, die Zeitdauer des Absenkvorgangs (sei es für die Halteregelung bei einem festen Restsauerstoffgehalt oder während des Absenkens auf ein neues Absenkungsniveau) zu reduzieren und somit auch den Energieverbrauch der Inertisierungsanlage herabzusetzen, da der Kompressor 3.1, 3.2 bzw. 3.3 auf seinem Arbeitspunkt mit optimalem Wirkungsgrad digital (ein/aus) gefahren wird.

Des Weiteren zeichnet sich die Inertisierunsanlage 1 gemäß der in Fig. 1, Fig. 2, Fig. 3 oder in Fig. 4 dargestellten Ausführungsform dadurch aus, dass dem Gasseparationssystem bestehend aus dem Kompressor 3.1 und dem Stickstoffgenerator 4.1 bzw. dem Gasseparationssystem bestehend aus den Kompressoren 3.1, 3.2, 3.3 und den Stickstoffgeneratoren 4.1, 4.2, 4.3 von der Mischkammer 6 ein Anfangs-Gasgemisch bereitgestellt wird, welches einen Sauerstoffgehalt aufweist, der niedriger als der Sauerstoffgehalt von normaler Umgebungsluft (d.h. etwa 21 Vol.-%) sein kann. Im Einzelnen ist hierfür die bereits genannte Rückführungsleitung 9 vorgesehen, mit welcher zumindest ein Teil der Raumluft des umschlossenen Raumes 2 der Mischkammer 6 in einer von der Steuereinrichtung 5 über das Ventil 11 geregelten Weise zugeführt werden kann. Wenn demnach in dem umschlossenen Raum 2 der Sauerstoffgehalt bereits reduziert ist, wird über die Rückführungsleitung 9 der Mischkammer 6 ein im Vergleich zur normalen Umgebungsluft mit Stickstoff angereichertes Gasgemisch zugeführt. Dieser Teil der Raumluft wird in der Mischkammer 6 mit Zuluft vermischt, um für den Kompressor 3.1 und den Stickstoffgenerator 4.1 bzw. den Kompressoren 3.1, 3.2, 3.3 und den Stickstoffgeneratoren 4.1, 4.2, 4.3 die erforderliche Menge des Anfangs-Gasgemisches bereitzustellen. Da der Sauerstoffgehalt des Anfangs-Gasgemisches einen Einfluss auf den Luftfaktor des Gasseparationssystems bzw. der zum Einsatz kommenden Stickstoffgeneratoren 4.1, 4.2, 4.3 hat, und somit auch einen Einfluss auf den zeitoptimierten Wert der Stickstoff-Reinheit der zum Einsatz kommenden Stickstoffgeneratoren 4.1, 4.2, 4.3 hat, ist bei der in Fig. 1 dargestellten Ausführungsform der erfindungsgemäßen Inertisierungsanlage 1 in dem Leitungssystem 15.1 zwischen dem Ausgang der Mischkammer 6 und dem Eingang des Kompressors 3.1 ein Sauerstoffmesssystem 22 zum Messen des Sauerstoffgehaltes in dem Ausgang-Gasgemisch vorgesehen. Optional hierzu ist es ferner denkbar, entsprechende Sauerstoffmesssysteme 23, 24 in der Rückführleitung 9 bzw. in der Frischluftzuführleitung 8 vorzusehen, um kontinuierlich oder zu vorgegebenen Zeiten bzw. Ereignissen den Sauerstoffgehalt in der Zuluft und in der mit Stickstoff angereicherten Raumluft zu erfassen. Anhand der Messergebnisse kann durch geeignetes Ansteuern der Ventilatoreinrichtungen 10 bzw. 11 die Zusammensetzung des Anfangs-Gasgemisches (insbesondere im Hinblick auf den Sauerstoffgehalt) geeignet beeinflusst werden.

Nachfolgend wird unter Bezugnahme auf die graphischen Darstellungen gemäß den Figuren 5 bis 7 die Wirkungsweise der erfindungsgemäßen Lösung anhand der in Fig. 1 bis 4 schematisch dargestellten Inertisierungsanlage 1 beschrieben. Hierbei wird davon ausgegangen, dass bei der in Fig. 1 bis 4 schematisch dargestellten Inertisierungsanlage 1 der umschlossene Raum 2 ein Raumvolumen von 1.000 m³ aufweist. Ferner soll davon ausgegangen werden, dass die Inertisierungsanlage 1 ausgelegt ist, am Ausgang des Gasseparationssystems pro Stunde insgesamt maximal 48 m³ mit Stickstoff angereichertes Gas bereitzustellen.

In Fig. 5 ist in einer graphischen Darstellung der Luftfaktor des bei der in Fig. 1 bis 4 schematisch dargestellten Inertisierungsanlage 1 zum Einsatz kommenden Gasseparationssystems bei unterschiedlichen Stickstoff-Reinheiten dargestellt. Demgemäß bleibt festzuhalten, dass der Luftfaktor exponentiell mit abnehmendem Sauerstoffrestgehalt in dem am Ausgang des Gasseparationssystems bereitgestellten und mit Stickstoff angereicherten Gasgemisch zunimmt. Im Einzelnen liegt der Luftfaktor bei einem Sauerstoffrestgehalt von 10 Vol.-% (Stickstoff-Reinheit: 90 %) bei etwa 1,5, was bedeutet, dass pro m³ Anfangs-Gasgemisch am Ausgang des Gasseparationssystems eine Menge von 0,67 m³ an mit Stickstoff angereichertem Gasgemisch bereitgestellt werden kann. Dieses Verhältnis verschlechtert sich mit zunehmender Stickstoff-Reinheit, wie es der graphischen Darstellung in Fig. 5 entnommen werden kann.

In Fig. 5 ist zusätzlich zu der Entwicklung des Luftfaktors dargestellt, wie sich die Regelabsenkzeit bei unterschiedlichen Stickstoff-Reinheiten mit zunehmender Stickstoff-Reinheit verhält. Im Einzelnen ist zum einen dargestellt, wie lange der Kompressor bzw. die Kompressoren 3.1, 3.2, 3.3 laufen muss/müssen, um in der Raumatmosphäre des umschlossenen Raumes 2 den Sauerstoffgehalt von ursprünglich 17,4 Vol.-% auf 17,0 Vol.-% abzusenken. Zusätzlich hierzu ist zum anderen dargestellt, wie lange der Kompressor bzw. die Kompressoren 3.1, 3.2, 3.3 laufen muss/müssen, um bei der Inertisierungsanlage 1 gemäß Fig. 1 bis 4 in der Raumluftatmosphäre des umschlossenen Raumes 2 den Sauerstoffgehalt von ursprünglich 13,4 Vol.-% auf 13,0 Vol.-% abzusenken.

Der Vergleich der beiden Absenkzeiten (Absenkzeit bei Regelung 17,4 Vol.-% → 17,0 Vol.-% und Absenkzeit bei Regelung 13,4 Vol.-% → 13,0 Vol.-%) zeigt, dass zum Einstellen und Halten eines Inertisierungsniveaus von 17,0 Vol.-% die Laufzeit des Kompressors 3.1 bzw. der Kompressoren 3.1, 3.2, 3.3 minimiert werden kann, wenn am Gasseparationssystem eine Stickstoff-Reinheit von etwa 93,3 Vol.-% eingestellt wird. Zum Einstellen und Halten eines Inertisierungsniveaus bei 13 Vol.-% Sauerstoffgehalt liegt hingegen die zeitoptimierte Reinheit bei etwa 94,1 Vol.-% Stickstoff. Demnach ist die Absenkzeit bzw. Laufzeit des Kompressors 3.1 bzw. der Kompressoren 3.1, 3.2, 3.3 zum Einstellen eines vorgegebenen Inertisierungsniveaus in der Raumluftatmosphäre des umschlossenen Raumes 2 abhängig von der beim Gasseparationssystem eingestellten Stickstoff-Reinheit bzw. abhängig von dem an den zum Einsatz kommenden Stickstoffgeneratoren 4.1, 4.2, 4.3 eingestellten Sauerstoffrestgehalt in dem am Ausgang des Gasseparationssystem bereitgestellten und mit Stickstoff angereicherten Gasgemisch.

Die jeweiligen Minima der Absenkzeit gegenüber der Stickstoff-Reinheit wird nachfolgend als "zeitoptimierte Stickstoff-Reinheit" bezeichnet. In der Darstellung gemäß Fig. 6 ist die zeitoptimierte Stickstoff-Reinheit bei der Inertisierungsanlage 1 gemäß Fig. 1 bis 4 dargestellt. Im Einzelnen ist für unterschiedliche Sauerstoffkonzentrationen in der Raumatmosphäre des umschlossenen Raumes 2 die zeitoptimierte Reinheit angegeben, welche für das Gasseparationssystem der Inertisierungsanlage 1 gemäß Fig. 1 bis 4 gilt.

Der in Fig. 6 dargestellten Kennlinie ist unmittelbar zu entnehmen, dass die zum Einsatz kommenden Stickstoffgeneratoren 4.1, 4.2, 4.3 so einzustellen sind, dass mit abnehmendem Sauerstoffgehalt in der Raumatmosphäre des umschlossenen Raumes 2 der Sauerstoffrestgehalt in dem am Ausgang des Gasseparationssystems bereitgestellten Gasgemisches abnimmt. Wenn demgemäß die Stickstoff-Reinheit der zum Einsatz kommenden Stickstoffgenerator beim Inertisieren des umschlossenen Raumes 2 gemäß der in Fig. 6 dargestellten Kennlinie betrieben wird, ist es möglich, mit möglichst geringer Laufzeit der zum Einsatz kommenden Kompressoren 3.1, 3.2, 3.3 und somit mit möglichst geringem Energieaufwand das vorgegebene Inertisierungsniveau in der Raumatmosphäre des umschlossenen Raumes 2 einzustellen und zu halten.

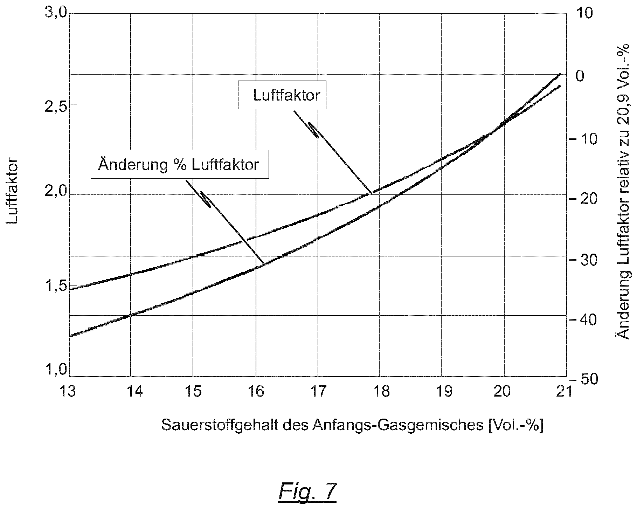

In Fig. 7 ist in einer graphischen Darstellung der Einfluss des Sauerstoffgehaltes in dem Anfangs-Gasgemisch auf den Luftfaktor des Gasseparationssystems gezeigt. Demnach sinkt der Luftfaktor bei einer fixierten Stickstoff-Reinheit des Gasseparationssystems bei Reduzierung des Sauerstoffgehalts in dem Anfangs-Gasgemisch. Wie bereits angedeutet, ist bei der Inertisierungsanlage 1 gemäß der schematischen Darstellung beispielsweise in Fig. 1 die Rückführungsleitung 9 vorgesehen, über welche ein Teil der (ggf. bereits mit Stickstoff angereicherten) Raumluft in geregelter Weise der Mischkammer 6 zugeführt wird, um auf diese Weise den Sauerstoffgehalt in dem Anfangs-Gasgemisch von den ursprünglichen 21 Vol.-% (Sauerstoffgehalt der normalen Umgebungsluft) zu reduzieren. Durch diese Rezirkulation der bereits mit Stickstoff angereicherten Raumluft kann somit der Luftfaktor des Gasseparationssystems weiter reduziert werden, so dass die Effizienz des Gasseparationssystems ansteigt und die zum Einstellen und Halten eines vorgegebenen Inertisierungsniveaus aufzubringende Energie noch weiter reduziert werden kann.

Vorzugsweise wird die in Fig. 7 dargestellte Kennlinie mit dem zuvor unter Bezugnahme auf die graphischen Darstellungen in den Figuren 5 und 6 gezeigten Verfahren so kombiniert, dass für jede Sauerstoffkonzentration in dem Anfangs-Gasgemisch und im Raum 2 eine optimierte Liefereinheit des Stickstoffs gefunden wird.

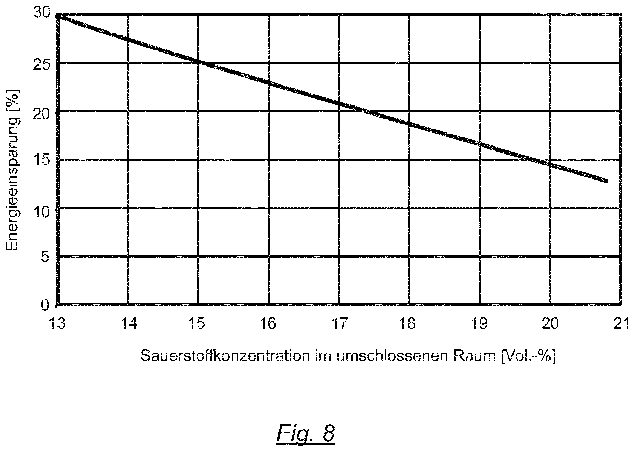

In Fig. 8 sind - für eine berechnete Anwendung - erzielbare Energieeinsparungen (in %) über den in der Raumatmosphäre eines umschlossenen Raumes eingestellten Sauerstoffgehalt dargestellt, wenn mit der erfindungsgemäßen Lösung die Sauerstoffkonzentration in der Raumatmosphäre des umschlossenen Raumes abgesenkt wird. Hierbei wurde ein Fall berücksichtigt, bei welchem einerseits während der Inertisierung des Raumes für die Stickstoff-Reinheit des Stickstoffgenerators die zeitoptimierte Stickstoff-Reinheit gewählt wurde, und bei welchem andererseits eine Rezirkulation der bereits mit Stickstoff angereicherten Raumluft erfolgte, um auf diese Weise den Luftfaktor des Stickstoffgenerators weiter zu reduzieren und seine Effizienz zu steigern.

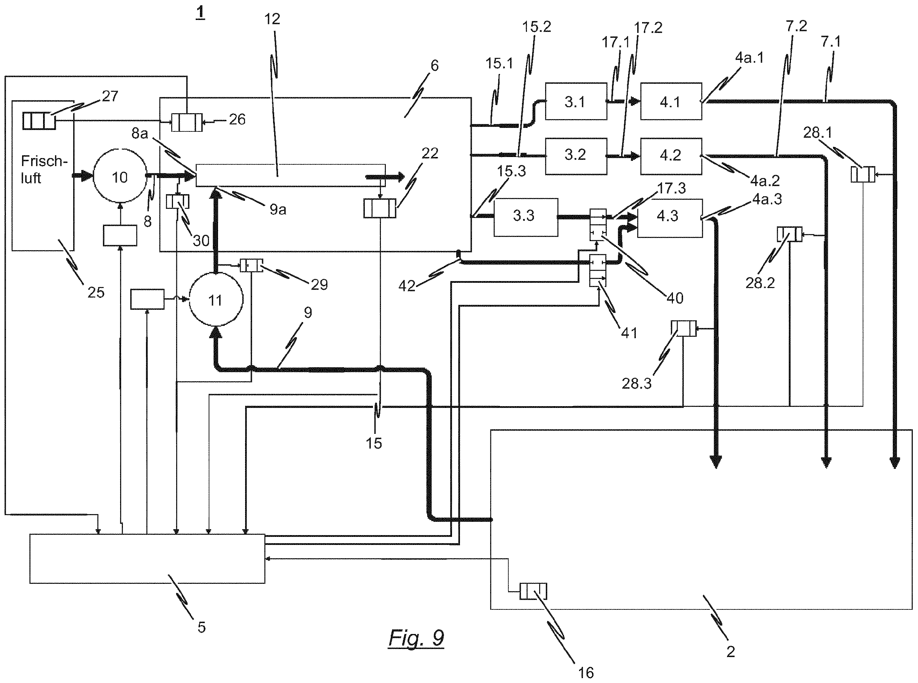

Nachfolgend wird unter Bezugnahme auf die Darstellung in Fig. 9 eine fünfte exemplarische Ausführungsform der erfindungsgemäßen Inertisierungsanlage 1 beschrieben.

Der Aufbau und die Funktionsweise der Inertisierungsanlage 1 gemäß der fünften Ausführungsform sind im Wesentlichen identisch mit der zuvor unter Bezugnahme auf die Darstellung in Fig. 4 beschriebene vierte Ausführungsform. Der Stickstoffgenerator 4.3 der Vielzahl von parallel geschalteten Stickstoffgeneratoren 4.1, 4.2. und 4.3 ist in dieser fünften Ausführungsform gemäß der VPSA-Technologie als Vakuum-Druckwechseladsorptionsgenerator ausgebildet. Wie bereits vorstehend unter Bezugnahme auf die vierte Ausführungsform gemäß Fig. 4 beschrieben, ist auch der Vakuum-Druckwechseladsorptionsgenerator 4.3 gemäß der fünften Ausführungsform mittels eines Leitungssystems 17.3 mit einem zugeordneten Kompressor 3.3 verbunden, welcher seinerseits über ein Leitungssystem 15.3 eine Verbindung zur Mischkammer 6 aufweist. In das Leitungssystem 17.3 zwischen dem Kompressor 3.3 und dem Vakuum-Druckwechseladsorptionsgenerator 4.3 ist zusätzlich ein Zwischenventil eingeschleift, welches ansteuerbar ausgebildet ist und zu diesem Zwecke eine Verbindung zur Steuereinrichtung 5 aufweist. Zusätzlich zu dieser unter Zwischenschaltung eines Kompressors 3.3 bestehenden Verbindung zwischen der Mischkammer 6 und dem Vakuum-Druckwechseladsorptionsgenerator 4.3 ist ein weiteres Leitungssystem 42 zwischen der Mischkammer 6 und dem Generator 4.3 vorgesehen. In dieses zusätzliche Leitungssystem 42 ist wiederum ein Zwischenventil eingeschleift, welches ebenfalls ansteuerbar ausgebildet ist und zu diesem Zweck mit der Steuereinrichtung 5 verbunden ist.

Die Steuereinrichtung 5 ist nun derart ausgebildet, während eines Adsorptionsbetriebes des Vakuum-Druckwechseladsorptionsgenerators 4.3 das Zwischenventil 40 zwischen dem Kompressor 3.3 und dem Generator 4.3 in einer geöffneten Stellung zu halten und das Zwischenventil 41 zwischen der Mischkammer 6 und dem Generator 4.3 während eines derartigen Adsorptionsbetriebes des Generators 4.3 in einer Geschlossenstellung zu halten. Während eines Desorptionsbetriebes des mindestens einen Eingang aufweisenden Vakuum-Druckwechseladsorptionsgenerators 4.3 baut der entsprechend ausgelegte zugeordnete Kompressor 3.3 an dem mindestens einem Eingang des Generators 4.3 einen Unterdruck auf, d.h. einen Druck, welcher im Gegensatz zum Umgebungsdruck in Richtung Vakuum reduziert ist. Während dieser Desorptionsphase wird dann vorzugsweise einige Sekunden und besonders vorzugsweise fünf Sekunden vor dem planmäßigen Zeitablauf der Desorptionsphase mittels der Steuereinrichtung 5 das Zwischenventil 41 zwischen der Mischkammer 6 und dem Generator 4.3 geöffnet, so dass bereits vor Ablauf der Desorptionsphase über das Leitungssystem 42 direkt mit Stickstoff angereicherte Luft aus der Mischkammer 6 in den mindestens einen Eingang des Vakuum-Druckwechseladsorptionsgenerators 4.3 einströmen kann. Um das Einströmen nicht zu behindern und eine Rückwirkung auf den Kompressor 3.3 zu verhindern, kann es dann vorgesehen sein, das Zwischenventil 40 zwischen dem Kompressor 3.3 und dem Generator 4.3 während dieses Druckausgleichvorganges in eine Geschlossenstellung zu bringen. Durch das passive, d.h. nicht durch den zugeordneten Kompressor 3.3 induzierte Einströmen der mit Stickstoff angereicherten Luft aus der Mischkammer in den mindestens einen Eingang des Generators 4.3 wird dann noch vor Ablauf der Desorptionsphase eine Druckerhöhung an dem Eingang und innerhalb des Generators 4.3 auf maximal den Druck innerhalb der Mischkammer 6 eingeleitet, welche durch die Umgehung des Kompressors 3.3 relativ rasch vonstatten geht und zudem keinen energieaufwendigen Betrieb des zugeordneten Kompressors 3.3 während dieses Druckausgleichvorganges erfordert.

In einer sich anschließenden Adsorptionsphase des Vakuum-Druckwechseladsorptionsgenerators 4.3 kann dann der zugeordnete Kompressor 3.3 den Generator 4.3 in reduzierter Zeit auf Betriebsdruck bringen, wodurch die Adsorption und damit die Bereitstellung von mit Stickstoff angereicherter Luft wieder früher einsetzt. Dadurch, dass die für den Druckausgleich verwendete Luft aus der Mischkammer 6 bereits mit Stickstoff angereichert ist, liegt in der sich anschließenden Adsorptionsphase des Generators 4.3 das Sauerstoffniveau von Beginn an niedriger.

Der Vakuum-Druckwechseladsorptionsgenerator 4.3 ist hierbei nicht auf einen Eingang bzw. auf ein einziges Molekularsiebbett, welches ggf. mit einem Kohlenstoffgranulat enthaltenden Behälter ausgestattet ist, beschränkt. Vielmehr ist es auch denkbar, vor jedem Behälter bzw. vor jedem Eingang des Vakuum-Druckwechseladsorptionsgenerators 4.3 ein eigenes, ansteuerbares Zwischenventil 41 vorzusehen, d.h. eine Verzweigung des Leitungssystems 42 zwischen der Mischkammer 6 und dem Generator 4.3 vor den jeweiligen Eingängen vorzusehen. Hierdurch ist dann ein wechselweiser Adsorptions- bzw. Desorptionsbetrieb eines Vakuum-Druckwechseladsorptionsgenerators 4.3 möglich, so dass an dessen Ausgang 4a.3 ein weitestgehend kontinuierlicher Strom an mit Stickstoff angereicherter Luft zum Einleiten in den umschlossenen Raum 2 zur Verfügung steht.

Die Mischkammer 6 ist vorzugsweise als vergleichsweise langes Mischrohr ausgebildet, und die in Richtung der Kompressoren 3.1, 3.2, 3.3 abgehenden Leitungssysteme 15.1, 15.2, 15.3 gehen dann am Rohrende eines derartigen Mischrohres ab. Durch entsprechende Dimensionierung einer Mischkammer 6, insbesondere eines derartigen vergleichsweise langen Mischrohres ist dann ein weitgehend rückwirkungsfreier Betrieb selbst dann gewährleistet, wenn ein derartiges passives Druckausgleichsverfahren mittels eines zusätzlichen Leitungssystems 42 zwischen der Mischkammer 6 und dem Vakuum-Druckwechseladsorptionsgenerator 4.3 zum Einsatz kommt. Mit anderen Worten wird durch entsprechende Bemaßung einer derartigen als langes Mischrohr ausgebildeten Mischkammer 6 eine Druckbeeinflussung, d.h. eine Druckwechselwirkung auf die Stickstoffgeneratoren 4.1, 4.2 auch beim Einsatz eines mit der Umgehungsleitung 42 ausgestatteten Vakuum-Druckwechseladsorptionsgenerators 4.3 auf unschädliche Werte reduziert.

Im Unterschied zu diesem in Fig. 9 dargestellten fünften Ausführungsbeispiel kann eine derartige zusätzliche Leitung 42 zwischen der Mischkammer 6 und einem Vakuum-Druckwechseladsorptionsgenerator 4.3 unter Zwischenschaltung eines entsprechend ansteuerbaren Zwischenventils 41 aber auch dann von Vorteil sein, wenn nicht eine große Vielzahl von Gasseparationssystemen 3.1, 4.1; 3.2, 4.2; 3.3, 4.3 zum Einsatz kommt bzw. wenn nicht Stickstoffgeneratoren 4.1, 4.2, 4.3 mit unterschiedlichen Gasseparationstechniken zum Einsatz kommen. Auch dann, wenn nur ein Vakuum-Druckwechseladsorptionsgenerator 4.3 vorgesehen ist, ergibt sich durch den passiven, mittels des Zwischenventils 41 ansteuerbaren Druckausgleich vor dem Ende der Desorptionsphase des Vakuum-Druckwechseladsorptionsgenerators 4.3 bei entsprechender Bemaßung der Mischkammer 6 der Vorteil, dass der zugeordnete Kompressor 3.3 insgesamt über einen kürzeren Zeitraum betrieben werden muss, wodurch sich ein Energiespareffekt ergibt.

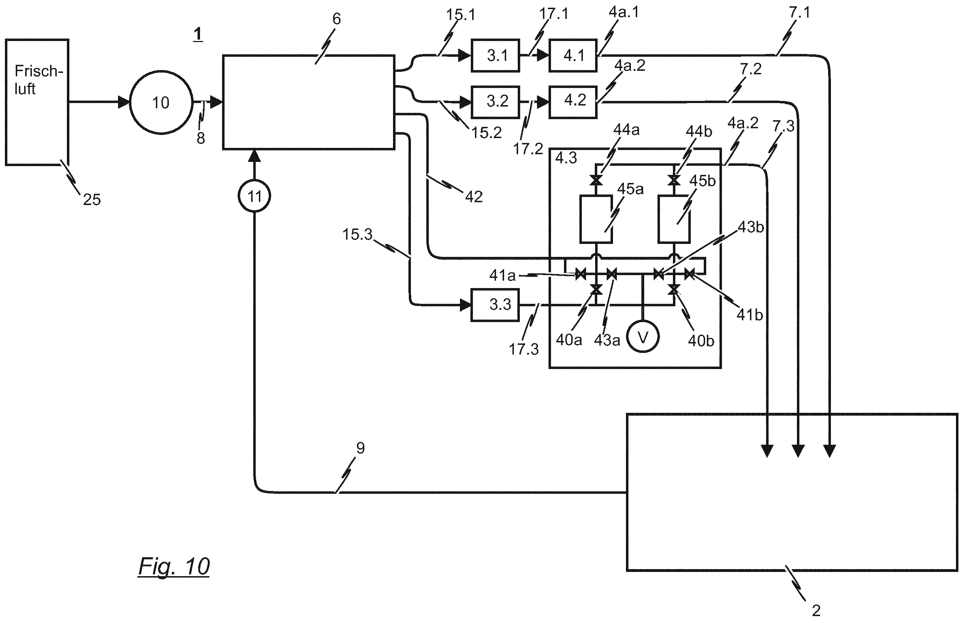

Nachfolgenden wird unter Bezugnahme auf die Darstellung in Figur 10 eine sechsten exemplarische Ausführungsform der erfindungsgemäßen Inertisierungsanlage 1 beschrieben.

Der Aufbau und die Funktionsweise der Inertisierunganlage 1 gemäß der sechsten Ausführungsform sind im Wesentlichen vergleichbar mit der zuvor unter Bezugnahme auf die Darstellung in Figur 9 beschriebene fünfte Ausführungsform. Der Stickstoffgenerator 4.3 der vielzahl von parallel geschalteten Stickstoffgeneratoren 4.1, 4.2 und 4.3 ist in dieser sechsten Ausführungsform ebenso wie in der oben beschrieben fünften Ausführungsform gemäß der VPSA-Technologie als Vakuum-Druckwechseladsorptionsgenerator ausgebildet. Widerrum ist der Vakuum-Druckwechseladsorptionsgenerator 4.3 gemäß der sechsten Ausführungsform mittels eines Leitungssystems 17.3 mit einem zugeordneten Kompressor 3.3 verbunden, welcher seinerseits über ein Leitungssystem 15.3 einer Verbindung zur Mischkammer 6 aufweist. Ferner weist der Vakuum-Druckwechseladsorptionsgenerator 4.3 einen weiteren Eingang auf, welcher über ein zusätzliches Leitungssystem 42 direkt mit der Mischkammer 6 verbunden ist. Zusätzlich weist der als Vakuum-Druckwechseladsorptionsgenerator ausgebildete Stickstoffgenerator 4.3 zwei unabhängig voneinander betreibbare Adsorptionsbetten 45a und 45b auf, welche unter Zwischenschaltung jeweils eines ansteuerbar ausgebildeten Zwischenventils 44a bzw. 44b mit einem Ausgang 4a.3 des Stickstoffgenerators 4.3 verbunden sind, welcher seinerseits über eine Zufuhrleitung 7.3 die mit Stickstoff angereicherte Luft dem umschlossenen Raum 2 zuführen kann. Jedem der Molekularsiebbetten 45a bzw. 45b sind im Bereich der jeweiligen Molekularsiebbetteinlässe mehrere weitere Zwischenventile 40a, 41a, 43a bzw. 40b, 41b, 43b zugeordnet. Alle diese Zwischenventile sind wiederum ansteuerbar ausgebildet und können zusammen mit den zusätzlichen Zwischenventilen 44a, 44b entsprechend derart angesteuert werden, dass jeweils während eines ersten Zeitraumes das erste Molekularsiebbett 45a in einem Adsorptionsmodus betrieben wird, um mit Stickstoff angereicherte Luft der Zufuhrleitung 7.3 zuzuführen. Während eines zweiten Zeitraumes wird dann das zweite Molekularsiebbett 45b in einem derartigen Adsorptionszustand betrieben, sodass ebenfalls mit Stickstoff angereicherte Luft der Zufuhrleitung 7.3 zugeführt werden kann. Mit anderen Worten, es ist mit einem derart ausgebildeten Druckwechsel-Adsorptionsgenerator 4.3 möglich, durch abwechselnden Betrieb der Molekularsiebbetten 45a, 45b jeweils in einem Adsorptions- bzw. Desorptionszustand einen kontinuierlichen Fluss in die Zufuhrleitung 7.3 auszugebender mit Stickstoff angereicherter Luft zu gewährleisten.

Während eines Adsorptionsbetriebes des ersten Molekularsiebbettes 45a des Vakuum-Druckwechseladsorptionsgenerators 4.3 ist das Zwischenventil 40a zwischen dem über das Leitungssystem 17.3 mit dem Kompressor 3.3 verbundenen Eingang des Stickstoffgenerators 4.3 sowie das zugehörige Zwischenventil 44a, welches den Auslass regelt, geöffnet, sodass mit Stickstoff angereicherte Luft am Ausgang 4a.3 des Stickstoffgenerators 4.3 zur Verfügung steht. Entsprechend ist während eines derartigen Adsorptionsbetriebes des ersten Molekularsiebbettes 45a des Stickstoffgenerators 4.3 das Zwischenventil 40b geschlossen, um das zweite Molekularsiebbett 45b nicht mit Druckluft aus dem Kompressor 3.3 zu beaufschlagen. Während dieser Zeit wird das zweite Molekularsiebbett 45b in einem Desorptionsmodus betrieben, wozu das Zwischenventil 43b geöffnet ist, um das zweite Molekularsiebbett 45b mit der Vakuumquelle V zu verbinden. Dementsprechend sind die Zwischenventile 43a sowie 44b in diesem Betriebszustand geschlossen. Ebenso sind die Zwischenventile 41a und 41b, welche eine Verbindung mit dem weiteren Leitungssystem 42 und damit mit der Mischkammer 6 herstellen können, ebenfalls geschlossen.

Soll nun von diesem Betriebszustand des als Druckwechsel-Adsorptionsgenerator ausgebildeten Stickstoffgenerators 4.3, d.h. aus dem Betriebszustand, in welchem das erste Molekularsiebbett 45a in einem Adsorptionsmodus und das zweite Molekularsiebbett 45b in einem Desorptionsmodus betrieben wird, in einen Betriebszustand umgeschaltet werden, während welchem in umgekehrter Weise das erste Molekularsiebbett 45a in einem Desorptionszustand betrieben wird und das zweite Molekularsiebbett 45b in einem Adsorptionszustand, so werden kurz vor dem Zeitpunkt, zu welchem des Desorptionsmodus des zweiten Molekularsiebbettes 45b beendet werden soll, die Zwischenventile 40a, 40b sowie 43a, 43b sowie ggf. auch die ausgabeseitig angeordneten Zwischenventile 44a, 44b geschlossen. Gleichzeitig oder unmittelbar darauffolgend wird dann das Zwischenventil 41b geöffnet, um über das weitere Leitungssystem 42 eine direkte Verbindung zwischen der Mischkammer 6 und dem zweiten Molekularsiebbett 45b herzustellen. Hierdurch erfolgt ein passiver Druckausgleich des innerhalb des zweiten Molekularsiebbettes 45b herrschenden Druckes, wobei in vorteilhafter Weise bereits mit Stickstoff angereicherte Luft aus der Mischkammer 6 in das zweite Molekularsiebbett 45b passiv einströmt. Nachdem dieser Druckausgleich vollzogen ist, kann das Zwischenventil 41b wieder geschlossen werden und zum Einleiten der Adsorptionsphase in den zweiten Molekularsiebbett 45b das Zwischenventil 40b zum Verbinden des Kompressors 3.3 mit dem Eingang des zweiten Molekularsiebbettes 45b geöffnet werden. In entsprechender Weise wird auf das ausgangsseitige Zwischenventil 44b zum Bereitstellen von mit stickstoffangereicherter Luft am Ausgang 4a.3 des Stickstoffgenerators 4.3 geöffnet. Nun kann das erste Molekularsiebbett 45a im Desorptionszustand betrieben werden, wozu lediglich das Zwischenventil 43a, welches den Eingang des ersten Molekularsiebbettes 45a mit der Vakuumquelle verbindet, geöffnet werden muss.

In analoger Weise ist ein Umschalten dieses mit zwei Molekularsiebbetten arbeitenden Stickstoffgenerators 4.3 aus einem Betriebszustand, in welchem sich das erste Molekularsiebbett 45a in einem Desorptionszustand befindet und das zweite Molekularsiebbett 45b in einem Adsorptionszustand unter Zwischenschaltung eines Schrittes, während welchem ein passiver Druckausgleich zum Beenden der Desorptionsphase in dem ersten Molekularsiebbett 45a stattfindet, durchgeführt werden.

Die Erfindung ist nicht auf die unter Bezugnahme auf die Darstellungen der beigefügten Zeichnungen gezeigten Ausführungsbeispiele beschränkt, sondern ergibt sich aus einer Zusammenschau sämtlicher hierin offenbarter Merkmale. Insbesondere ist in diesem Zusammenhang zu beachten, dass in den Zeichnungen selbstverständliche, nicht erfindungswesentliche Merkmale ggf. nicht detailliert gezeigt sind. So ist in den Zeichnungen der Ausgang für sauerstoffangereichertes Gas der jeweiligen Stickstoffgeneratoren 4.1, 4.2, 4.3 nicht gezeigt. Ebenso kann es in der sechsten Ausführungsform gemäß Fig. 10 vorgesehen sein, eine entsprechend ausgebildete Steuereinrichtung 5 vorzusehen und diese in zweckmäßiger Weise mit den einzelnen anzusteuernden Elementen, wie beispielsweise den Zwischenventilen zu verbinden.

### Bezugszeichenliste

- 1: Inertisierungsanlage
- 2: umschlossener Raum
- 3.1, 3.2, 3.3: Kompressor
- 4.1, 4.2, 4.3: Stickstoffgenerator
- 4a.1, 4a.2, 4a.3: Ausgang des Stickstoffgenerators
- 5: Steuereinrichtung
- 6: Mischkammer
- 7.1, 7.2, 7.3: Zufuhrleitung
- 8: (Frischluft-)Zufuhrleitung
- 8a: Eingang der Frischluft-Zufuhrleitung
- 9: Rückführleitung
- 9a: Eingang der Rückführleitung
- 10: zweite Ventilatoreinrichtung
- 11: erste Ventilatoreinrichtung
- 12: Mischstrecke
- 13: Wärmetauschersystem
- 14: Stützventilator
- 15.1, 15.2, 15.3: Leitungssystem zwischen Mischkammer und Kompressor
- 16: Sauerstoffmesssystem
- 17.1, 17.2, 17.3: Leitungssystem zwischen Kompressor und Stickstoffgenerator
- 18: Filter
- 19: Membranmodul
- 20: thermische Isolierung
- 21: Sauerstoffrestgehalt-Messsystem
- 23: Sauerstoffmesssystem in Rückführleitung 9
- 24: Sauerstoffmesssystem in Zufuhrleitung 8
- 25: Außenbereich
- 26: Drucksensor in der Mischkammer
- 27: Drucksensor im Außenbereich
- 28.1, 28.2, 28.3: Volumenstromsensor in Zufuhrleitung 7.1, 7.2, 7.3
- 29: Volumenstromsensor in Rückführleitung 9
- 30: Volumenstromsensor in Frischluft-Zufuhrleitung 8
- 40, 40a, 40b: Zwischenventil zwischen Kompressor und Molekularsiebbetteingang
- 41, 41a, 41b: Zwischenventil zwischen Mischkammer und Molekularsiebbetteingang
- 42: Leitungssystem zwischen Mischkammer und Stickstoffgenerator
- 43a, 43b: Zwischenventil zwischen Vakuumquelle und Molekularsiebbetteingang
- 44a, 44b: Zwischenventil zwischen Molekularsiebbettausgang und Zufuhrleitung
- 45a, 45b: Molekularsiebbett und V Vakuumquelle

## Patentansprüche

1. Inertisierungsverfahren zur Brandverhütung und/oder Feuerlöschung, bei welchem in der Raumatmosphäre eines umschlossenen Raumes (2) ein vorgebbarer und im Vergleich zur normalen Umgebungsluft reduzierter Sauerstoffgehalt eingestellt und gehalten wird, wobei das Verfahren die folgenden Verfahrensschritte aufweist:
- es wird in einer Mischkammer (6), vorzugsweise in einer als Mischrohr ausgebildeten Mischkammer (6), ein Anfangs-Gasgemisch bereitgestellt, welches Sauerstoff, Stickstoff und ggf. weitere Komponenten aufweist;
- es wird in einem Gasseparationssystem (3.1, 4.1; 3.2, 4.2; 3.3, 4.3) zumindest ein Teil des Sauerstoffs aus dem bereitgestellten Anfangs-Gasgemisch abgetrennt und auf diese Weise am Ausgang (4a.1; 4a.2; 4a.3) des Gasseparationssystems (3.1, 4.1; 3.2, 4.2; 3.3, 4.3) ein mit Stickstoff angereichertes Gasgemisch bereitgestellt; und
- das mit Stickstoff angereicherte Gasgemisch wird in die Raumatmosphäre des umschlossenen Raumes (2) geleitet,
wobei zum Bereitstellen des Anfangs-Gasgemisches mit Hilfe einer in einem den umschlossenen Raum (2) mit der Mischkammer (6) verbindenden Rückführleitungssystem (9) vorgesehenen Ventilatoreinrichtung (11) ein Teil der in dem umschlossenen Raum (2) enthaltenen Raumluft in geregelter Weise dem Raum (2) entnommen und der Mischkammer (6) zugeführt und dem entnommenen Teil der Raumluft mit Hilfe einer in einem mit der Mischkammer (6) verbundenen Frischluft-Zuführleitungssystem (8) vorgesehenen Ventilatoreinrichtung (10) in geregelter Weise Frischluft zugemischt wird.

2. Inertisierungsverfahren nach Anspruch 1,
wobei die in dem Rückführleitungssystem (9) vorgesehene Ventilatoreinrichtung (11) derart angesteuert wird, dass die pro Zeiteinheit dem Raum (2) entnommene und der Mischkammer (6) zugeführte Menge an Raumluft derart eingestellt wird, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet, wobei der obere Schwellwert für den Differenzdruck vorzugsweise bei 1,0 mbar und noch bevorzugter bei 0,5 mbar liegt, und wobei der untere Schwellwert für den Differenzdruck vorzugsweise bei 0 mbar liegt; und/oder
wobei die in dem Frischluft-Zuführungssystem (8) vorgesehene Ventilatoreneinrichtung (10) derart angesteuert wird, dass die pro Zeiteinheit dem entnommenen Teil der Raumluft zugemischte Menge an Frischluft derart eingestellt wird, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet, wobei der obere Schwellwert für den Differenzdruck vorzugsweise bei 1,0 mbar und noch bevorzugter bei 0,5 mbar liegt, und wobei der untere Schwellwert für den Differenzdruck vorzugsweise bei 0 mbar liegt.

3. Inertisierungsverfahren nach Anspruch 1 oder 2,
wobei die in dem Frischluft-Zuführleitungssystem (8) vorgesehene Ventilatoreinrichtung (10) derart angesteuert wird, dass die Menge der pro Zeiteinheit dem Raum (2) entnommenen Raumluft identisch ist mit der Menge des mit Stickstoff angereicherten Gasgemisches, welche pro Zeiteinheit in die Raumatmosphäre des umschlossenen Raums (2) geleitet wird.

4. Inertisierungsverfahren nach einem der Ansprüche 1 bis 3,
wobei der Sauerstoffrestgehalt des mit Stickstoff angereicherten Gasgemisches in Abhängigkeit von dem aktuell in der Raumatmosphäre des umschlossenen Raumes (2) herrschenden Sauerstoffgehalt verändert wird, wobei der Sauerstoffrestgehalt des mit Stickstoff angereicherten Gasgemisches vorzugsweise mit abnehmendem Sauerstoffgehalt in der Raumatmosphäre des umschlossenen Raumes (2) reduziert wird; und/oder wobei der Sauerstoffrestgehalt des mit Stickstoff angereicherten Gasgemisches vorzugsweise gemäß einer vorab ermittelten Kennlinie eingestellt wird, wobei die Kennlinie vorzugsweise den zeitoptimierten Wert des Sauerstoffrestgehaltes des mit Stickstoff angereicherten Gasgemisches gegenüber dem Sauerstoffgehalt in der Raumatmosphäre des umschlossenen Raumes (2) angibt, gemäß welchem mit dem Inertisierungsverfahren innerhalb kürzester Zeit in der Raumatmosphäre des umschlossenen Raumes (2) ein vorgebbarer und im Vergleich zur normalen Umgebungsluft reduzierter Sauerstoffgehalt einstellbar ist.

5. Inertisierungsverfahren nach Anspruch 4,
wobei kontinuierlich oder zu vorgegebenen Zeiten und/oder Ereignissen der aktuell in der Raumatmosphäre des umschlossenen Raumes (2) herrschende Sauerstoffgehalt direkt oder indirekt gemessen wird, und wobei kontinuierlich oder zu vorgegebenen Zeiten und/oder Ereignissen der Sauerstoffrestgehalt des mit Stickstoff angereicherten Gasgemisches auf einen vorab festgelegten Wert eingestellt wird, bei welchem mit dem Inertisierungsverfahren der Sauerstoffgehalt in der Raumatmosphäre des umschlossenen Raumes innerhalb kürzester Zeit um einen vorgegebenen Absenkungsbetrag auf den jeweils aktuellen Sauerstoffgehalt absenkbar ist.

6. Inertisierungsverfahren nach einem der Ansprüche 1 bis 5,
wobei der Sauerstoffgehalt des Anfangs-Gasgemisches, aus welchem zumindest ein Teil des Sauerstoffs abgetrennt wird, in Abhängigkeit von dem aktuell in der Raumatmosphäre des umschlossenen Raumes (2) herrschenden Sauerstoffgehalt verändert wird.

7. Inertisierungsverfahren nach einem der Ansprüche 1 bis 6,
wobei das Gasseparationssystem (3.1, 4.1; 3.2, 4.2; 3.3, 4.3) mindestens einen als Vakuum-Druckwechseladsorptionsgenerator ausgebildeten Stickstoffgenerator (4.3) aufweist, welcher mindestens einen Eingang aufweist, wobei der mindestens eine Eingang wahlweise über ein Leitungssystem (17.3) mit der Druckseite eines Kompressors (3.3) oder mit der Saugseite einer Vakuumquelle (V) verbunden wird,
wobei während einer Desorptionsphase des als Vakuum-Druckwechseladsorptionsgenerator ausgebildeten Stickstoffgenerators (4.3) vorzugsweise der mindestens eine Eingang des Stickstoffgenerators (4.3) mit der Saugseite der Vakuumquelle (V) verbunden wird; und/oder wobei vorzugsweise mindestens ein Eingang des als Vakuum-Druckwechseladsorptionsgenerator ausgebildeten Stickstoffgenerators (4.3) wahlweise über ein Leitungssystem (42) mit der Mischkammer (6) verbunden wird, und wobei noch bevorzugter der mindestens eine Eingang des als Vakuum-Druckwechseladsorptionsgenerator ausgebildeten Stickstoffgenerators (4.3) zum Beenden einer Desorptionsphase des Stickstoffgenerators (4.3) über das Leitungssystem (42) mit der Mischkammer (6) verbunden wird.

8. Inertisierungsanlage (1) zum Einstellen und/oder Halten eines vorgebbaren und im Vergleich zur normalen Umgebungsluft reduzierten Sauerstoffgehalts in der Raumatmosphäre eines umschlossenen Raumes (2), wobei die Inertisierungsanlage ein Gasseparationssystem (3.1, 4.1; 3.2, 4.2; 3.3, 4.3) aufweist, mit welchem von einem Stickstoff und Sauerstoff enthaltenen Anfangs-Gasgemisch zumindest ein Teil des Sauerstoffs abgetrennt und auf diese Weise am Ausgang (4a.1; 4a.2; 4a.3) des Gasseparationssystems (3.1, 4.1; 3.2, 4.2; 3.3, 4.3) ein mit Stickstoff angereichertes Gasgemisch bereitgestellt wird, und wobei die Inertisierungsanlage (1) ein Zuführleitungssystem (7) aufweist zum Zuführen des mit Stickstoff angereicherten Gasgemisches zu dem umschlossenen Raum (2),
wobei ferner eine Mischkammer (6), vorzugsweise eine als Mischrohr ausgebildete Mischkammer (6), vorgesehen ist zum Bereitstellen des Anfangs-Gasgemisches, wobei in der Mischkammer (6) ein erstes Leitungssystem (9) mündet, über welches ein Teil der in dem umschlossenen Raum (2) enthaltenen Raumluft dem Raum (2) entnommen und der Mischkammer (6) zugeführt wird, und wobei in der Mischkammer (6) ein zweites Leitungssystem (8) mündet, über welches Frischluft der Mischkammer (6) zugeführt wird,
**dadurch gekennzeichnet, dass**
die Inertisierungsanlage (1) ferner in dem ersten Leitungssystem (9) eine erste mit einer Steuereinrichtung (5) ansteuerbare Ventilatoreinrichtung (11) und in dem zweiten Leitungssystem (8) eine zweite mit der Steuereinrichtung (5) ansteuerbare Ventilatoreinrichtung (10) aufweist.

9. Inertisierungsanlage (1) nach Anspruch 8,
wobei die Steuereinrichtung (5) ausgelegt ist, die erste Ventilatoreinrichtung (11) derart anzusteuern, dass die mit Hilfe der ersten Ventilatoreinrichtung (11) pro Zeiteinheit dem Raum (2) entnommene und der Mischkammer (6) zugeführte Menge an Raumluft derart eingestellt wird, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet; und/oder wobei die Steuereinrichtung (5) ausgelegt ist, die zweite Ventilatoreinrichtung (10) derart anzusteuern, dass die mit Hilfe der zweiten Ventilatoreinrichtung (10) pro Zeiteinheit dem entnommenen Teil der Raumluft zugemischte Menge an Frischluft derart eingestellt wird, dass die Differenz zwischen dem in der Mischkammer (6) herrschenden Druck und dem Außenatmosphärendruck einen vorgegebenen oder vorgebbaren oberen Schwellwert nicht überschreitet und einen vorgegebenen oder vorgebbaren unteren Schwellwert nicht unterschreitet; und/oder
wobei ferner eine Steuereinrichtung (5) vorgesehen ist, welche ausgelegt ist, dass Gasseparationssystem (3.1, 4.1; 3.2, 4.2; 3.3, 4.3) derart anzusteuern, dass der Sauerstoffrestgehalt des mit Stickstoff angereicherten Gasgemisches in Abhängigkeit von dem aktuell in der Raumatmosphäre des umschlossenen Raumes (10) herrschenden Sauerstoffgehalt verändert wird.

10. Inertisierungsanlage (1) nach Anspruch 8 oder 9,
welche ferner in dem ersten Leitungssystem (9) eine erste mit einer Steuereinrichtung (5) ansteuerbare Ventilatoreinrichtung (11) und in dem zweiten Leitungssystem (8) eine zweite mit der Steuereinrichtung (5) ansteuerbare Ventilatoreinrichtung (10) aufweist, wobei die Steuereinrichtung (5) ausgelegt ist, die erste und/oder zweite Ventilatoreinrichtung (10, 11) derart anzusteuern, dass die Menge der pro Zeiteinheit dem Raum (2) entnommenen Raumluft identisch ist mit der Menge des mit Stickstoff angereicherten Gasgemisches, welche pro Zeiteinheit der Raumatmosphäre des umschlossenen Raumes (2) zugeführt wird.

11. Inertisierungsanlage (1) nach einem der Ansprüche 8 bis 10,
wobei ferner eine in der Mischkammer (6) integrierte oder der Mischkammer (6) vorgeschaltete Mischstrecke (12) vorgesehen ist, in welcher das erste und zweite Leitungssystem (9, 8) vorzugsweise über ein Y-Stück münden, wobei die Mischstrecke (12) insbesondere im Hinblick auf ihren effektiven Strömungsquerschnitt derart konfiguriert ist, dass sich in der Mischstrecke (12) eine turbulente Strömung einstellt, wobei die Mischstrecke (12) vorzugsweise eine Länge aufweist, die mindestens das Fünffache des hydraulischen Durchmessers der Mischstrecke (12) ist.

12. Inertisierungsanlage (1) nach einem der Ansprüche 8 bis 11,
wobei das Gasseparationssystem (3.1, 4.1; 3.2, 4.2; 3.3, 4.3) mindestens einen und vorzugsweise eine Vielzahl von Stickstoffgeneratoren (4.1, 4.2, 4.3) mit jeweils einem zugeordneten und über ein Leitungssystem (17.1, 17.2, 17.3) mit der Mischkammer (6) verbundenen Kompressor (3.1, 3.2, 3.3) aufweist,
wobei vorzugsweise bei dem mindestens einen und noch bevorzugter bei jedem Stickstoffgenerator (3.1, 3.2, 3.3) der Sauerstoffrestgehalt des am Ausgang (4a.1, 4a.2, 4a.3) des Stickstoffgenerators (3.1, 3.2, 3.3) bereitgestellten und mit Stickstoff angereicherten Gasgemisches mit Hilfe einer Steuereinrichtung (5) einstellbar ist.

13. Inertisierungsanlage (1) nach Anspruch 12,
wobei der mindestens eine Stickstoffgenerator (4.3) als Vakuum-Druckwechseladsorptionsgenerator ausgebildet ist,
und wobei mindestens eine Vakuumquelle (V) vorgesehen ist, mit welcher mindestens ein Eingang der als Vakuum-Druckwechseladsorptionsgenerator ausgebildeten Stickstoffgenerators (4.3) verbindbar ist; und/oder wobei der mindestens eine Stickstoffgenerator (4.3) als Vakuum-Druckwechseladsorptionsgenerator ausgebildet ist und wobei die Inertisierungsanlage (1) zusätzlich ein Leitungssystem (42) aufweist, über welches mindestens ein Eingang des als Vakuum-Druckwechseladsorptionsgenerator ausbildeten Stickstoffgenerators (4.3) mit der Mischkammer (6) verbindbar ist.

14. Inertisierungsanlage (1) nach einem der Ansprüche 8 bis 13,
wobei die Mischkammer (6) ein Volumen aufweist, welches von der Anzahl der bei der Inertisierungsanlage (1) zum Einsatz kommenden Stickstoffgeneratoren (4.1, 4.2, 4.3) und/oder von dem Prinzip abhängt, auf welchem die Funktionsweise des mindestens einen Stickstoffgenerators (4.1, 4.2, 4.3) basiert; und/oder
wobei der hydraulische Querschnitt der Mischkammer (6) mindestens so groß ist, dass die in der Mischkammer (6) maximal auftretbare Strömungsgeschwindigkeit im Durchschnitt geringer als 0,1 m/s ist.

15. Inertisierungsanlage (1) nach einem der Ansprüche 8 bis 14,
wobei eine Steuereinrichtung (5) vorgesehen ist, welche ausgelegt ist, in Abhängigkeit von dem aktuell in der Raumatmosphäre des umschlossenen Raumes (2) herrschenden Sauerstoffgehalt das Gasseparationssystem (3.1, 4.1;3.2, 4.2; 3.3, 4.3) derart anzusteuern, dass der Sauerstoffrestgehalt des am Ausgang (4a.1; 4a.2; 4a.3) des Gasseparationssystems (3.1, 4.1; 3.2, 4.2; 3.3, 4.3) bereitgestellten und mit Stickstoff angereicherten Gasgemisches automatisch reduziert wird, wenn der Sauerstoffgehalt in der Raumatmosphäre des umschlossenen Raumes (2) abnimmt; und/oder wobei eine Steuereinrichtung (5) vorgesehen ist, welche ausgelegt ist, in Abhängigkeit von dem aktuell in der Raumatmosphäre des umschlossenen Raumes (2) herrschenden Sauerstoffgehalt die pro Zeiteinheit dem Raum (2) entnommene und der Mischkammer (6) zugeführte Menge an Raumluft und die pro Zeiteinheit dem entnommenen Teil der Raumluft zugemischte Menge an Frischluft derart einzustellen, dass das von der Mischkammer (6) bereitgestellte Anfangs-Gasgemisch einen von dem aktuell in der Raumatmosphäre des umschlossenen Raumes (2) herrschenden Sauerstoffgehalt abhängigen und vorgebbaren Sauerstoffgehalt aufweist; und/oder wobei ferner eine Steuereinrichtung (5) vorgesehen ist, welche ausgelegt ist, die ansteuerbaren Komponenten der Inertisierungsanlage (1) derart anzusteuern, dass ein Inertisierungsverfahren nach einem der Ansprüche 1 bis 7 realisierbar ist.

## Claims

1. An inerting method for preventing and/or extinguishing fire in which in a predefinable oxygen content which is lower than normal ambient air is set and maintained in the spatial atmosphere of an enclosed room (2), wherein the method comprises the following steps:
- providing an initial gas mixture containing oxygen, nitrogen and other components as applicable in a mixing chamber (6), preferably in a mixing chamber (6) configured as a mixing tube;
- a gas separation system (3.1, 4.1; 3.2, 4.2; 3.3, 4.3) separating off at least a portion of the oxygen from the initial gas mixture provided and in so doing, providing a nitrogen-enriched gas mixture at the outlet (4a.1; 4a.2; 4a.3) of the gas separation system (3.1, 4.1; 3.2, 4.2; and
- piping the nitrogen-enriched gas mixture into the spatial atmosphere of the enclosed room (2),
wherein to provide the initial gas mixture using a fan mechanism (11) provided in the return line system (9) connecting the enclosed room (9) to the mixing chamber (6), a portion of the ambient air contained within the enclosed room (2) is withdrawn from the room (2) in regulated manner and fed to the mixing chamber (6), and the withdrawn portion of the room's air is mixed in regulated manner with fresh air by means of a fan mechanism (10) provided in the fresh air supply line system (8) connected to the mixing chamber (6).

2. The inerting method according to claim 1,
wherein the fan mechanism (11) provided in the return supply line system (9) is controlled such that the volume of air withdrawn from the room (2) per unit of time and the volume of spatial air supplied to the mixing chamber (6) can be set so that the difference between the pressure prevailing in the mixing chamber (6) and the pressure of the external ambient atmosphere does not exceed a predefined or predefinable upper threshold nor fall short of a predefined or predefinable lower threshold, wherein the upper pressure differential threshold is preferably 1.0 mbar and even more preferentially 0.5 mbar, and wherein the lower pressure differential threshold is preferably 0 mbar; and/or
wherein the fan mechanism (10) provided in the fresh air supply line system (8) is controlled such that the volume of fresh air mixed with the withdrawn volume of room air per unit of time is set such that the difference between the pressure prevailing in the mixing chamber (6) and the pressure of the external ambient atmosphere does not exceed a predefined or predefinable upper threshold nor fall short of a predefined or predefinable lower threshold, wherein the upper pressure differential threshold is preferably 1.0 mbar and even more preferentially 0.5 mbar, and wherein the lower pressure differential threshold is preferably 0 mbar.

3. The inerting method according to claim 1 or 2,
wherein the fan mechanism (10) provided in the fresh air supply line system (8) is controlled such that the volume of spatial air withdrawn from the room (2) per unit of time is identical to the volume of nitrogen-enriched gas mixture supplied to the spatial atmosphere of the enclosed room (2) per unit of time.

4. The inerting method according to one of claims 1 to 3,
wherein the residual oxygen content of the nitrogen-enriched gas mixture is changed as a function of the oxygen content prevailing in the spatial atmosphere of the enclosed room (2) at the respective moment, wherein the residual oxygen content of the nitrogen-enriched gas mixture preferably decreases as the oxygen content in the spatial atmosphere of the enclosed room (2) is reduced; and/or
wherein the residual oxygen content of the nitrogen-enriched gas mixture is preferably set according to a predetermined characteristic curve, wherein the characteristic curve preferably specifics the time-optimized value for the residual oxygen content of the nitrogen-enriched gas mixture in relation to the oxygen content in the spatial atmosphere of the enclosed room (2), according to which the inerting process can set a predefinable reduced oxygen content in the spatial atmosphere of the enclosed room (2) compared to the normal ambient air in the shortest amount of time.

5. The inerting method according to claim 4,
wherein the oxygen content prevailing in the spatial atmosphere of the enclosed room (2) at the respective moment is directly or indirectly measured continuously or at predefined times and/or upon predefined events, and wherein the residual oxygen content in the nitrogen-enriched gas mixture is set continuously or at predefined times and/or upon predefined events to a predefined value at which the inerting method can lower the oxygen content in the spatial atmosphere of the enclosed room to a predefined drawdown value based on the respectively current oxygen content within the shortest amount of time possible.

6. The inerting method according to one of claims 1 to 5,
wherein the oxygen content of the initial gas mixture, from which at least a portion of the oxygen is separated off, is changed as a function of the oxygen content prevailing at the respective moment in the spatial atmosphere of the enclosed room (2).

7. The inerting method according to one of claims 1 to 6,
wherein the gas separation system (3.1, 4.1; 3.2, 4.2; 3.3, 4.3) comprises at least one nitrogen generator (4.3) configured as a vacuum pressure swing adsorption generator having at least one inlet, wherein the at least one inlet is selectively connected to the pressure side of a compressor (3.3) or to the suction side of a vacuum source (V) by means of a line system (17.3),
wherein the at least one inlet of the nitrogen generator (4.3) configured as a vacuum pressure swing adsorption generator is preferably connected to the suction side of the vacuum source (V) during a desorption phase of the nitrogen generator (4.3); and/or
wherein preferably at least one inlet of the nitrogen generator (4.3) configured as a vacuum pressure swing adsorption generator is selectively connected to the mixing chamber (6) by means of a line system (42), and wherein the at least one inlet of the nitrogen generator (4.3) configured as a vacuum pressure swing adsorption generator is even more preferentially connected to the mixing chamber (6) by means of the line system (42) to end a desorption phase of the nitrogen generator (4.3).

8. An inerting system (1) for setting and/or maintaining a predefinable oxygen content in the spatial atmosphere of an enclosed room (2) which is reduced compared to the normal ambient air, wherein the inerting system comprises a gas separation system (3.1, 4.1; 3.2, 4.2; 3.3, 4.3) which separates off at least a portion of the oxygen from an initial gas mixture containing nitrogen and oxygen and in so doing, provides a nitrogen-enriched gas mixture at the outlet (4a.1; 4a.2; 4a.3) of the gas separation system (3.1, 4.1; 3.2, 4.2; 3.3, 4.3), and wherein the inerting system (1) comprises a supply line system (7) for supplying the nitrogen-enriched gas mixture to the enclosed room (2),
wherein a mixing chamber (6), preferably a mixing chamber (6) configured as a mixing tube, is further provided to provide the initial gas mixture, wherein a first line system (9) through which a portion of the spatial air contained in the enclosed room (2) is withdrawn and fed to said mixing chamber (6) opens into the mixing chamber (6), and wherein a second line system (8) through which fresh air is supplied to the mixing chamber (6) opens into said mixing chamber (6).
**characterized in that**
the inerting system (1) further comprises a first fan mechanism (11) in the first line system (9) which is controllable by means of a control unit (5) and a second fan mechanism (10) in the second line system (8) which is controllable by means of the control unit (5)

9. The inerting system (1) according to claim 8,
wherein the control unit (5) is designed so as to control the first fan mechanism (11) such that the amount of air withdrawn from the room (2) per unit of time and fed to the mixing chamber (6) by means of said first fan mechanism (11) can be set such that the difference between the pressure prevailing in the mixing chamber (6) and the pressure of the external ambient atmosphere does not exceed a predefined or predefinable upper threshold nor fall short of a predefined or predefinable lower threshold; and/or
wherein the control unit (5) is designed so as to control the second fan mechanism (10) such that the volume of fresh air mixed with the withdrawn portion of room air per unit of time by means of the second fan mechanism (10) can be set such that the difference between the pressure prevailing in the mixing chamber (6) and the pressure of the external ambient atmosphere does not exceed a predefined or predefinable upper threshold nor fall short of a predefined or predefinable lower threshold; and/or
wherein a control unit (5) is further provided which is designed to control the gas separation system (3.1, 4.1; 3.2, 4.2; 3.3, 4.3) such that the residual oxygen content of the nitrogen-enriched gas mixture is changed as a function of the oxygen content prevailing at that respective moment in the spatial atmosphere of the enclosed room (10).

10. The inerting system (1) according to claim 8 or 9,
wherein a first fan mechanism (11) controllable by a control unit (5) is further comprised in the first line system (9) and a second fan mechanism (10) controllable by a control unit (5) is provided in the second line system (8), wherein the control unit (5) is designed to control the first and/or second fan mechanism (10, 11) such that the volume of spatial air withdrawn from the room (2) per unit of time is identical to the volume of the nitrogen-enriched gas mixture supplied to the spatial atmosphere of the enclosed room (2) per unit of time.

11. The inerting system (1) according to one of claims 8 to 10,
wherein a mixing section (12) is further integrated into the mixing chamber (6) or provided upstream of the mixing chamber (6) into which opens the first and the second line system (9, 8), preferably by means of a Y-connector, wherein the mixing section (12) is configured particularly with respect to its effective flow cross section such that a turbulent flow will occur in the mixing section (12), wherein the mixing section (12) is preferably of a length which is at least five times the hydraulic diameter of the mixing section (12).

12. The inerting system (1) according to one of claims 8 to 11,
wherein the gas separation system (3.1, 4.1; 3.2, 4.2; 3.3, 4.3) comprises at least one and preferably a plurality of nitrogen generators (4.1, 4.2, 4.3) each associated with a respective compressor (3.1, 3.2, 3.3) connected to the mixing chamber (6) by means of a line system (17.1, 17.2, 17.3),
wherein the residual oxygen content of the nitrogen-enriched gas mixture provided at the outlet (4a.1, 4a.2, 4a.3) of the preferably at least one and even more preferentially at each nitrogen generator (3.1, 3.2, 3.3) can preferably be set at each nitrogen generator (3.1, 3.2, 3.3) by means of a control unit (5).

13. The inerting system (1) according to claim 12,
wherein the at least one nitrogen generator (4.3) is configured as a vacuum pressure swing adsorption generator,
and wherein at least one vacuum source (V) is provided to which at least one inlet of the nitrogen generator (4.3) configured as a vacuum pressure swing adsorption generator can be connected; and/or
wherein the at least one nitrogen generator (4.3) is configured as a vacuum pressure swing adsorption generator and wherein the inerting system (1) additionally comprises a line system (42) by means of which at least one inlet of the nitrogen generator (4.3) configured as a vacuum pressure swing adsorption generator can be connected to the mixing chamber (6).

14. The inerting system (1) according to one of claims 8 to 13,
wherein the mixing chamber (6) exhibits a volume which is dependent on the number of nitrogen generators (4.1, 4.2, 4.3) utilized in the inerting system (1) and/or on the principle on which the functioning of the least one nitrogen generator (4.1, 4.2, 4.3) is based; and/or
wherein the hydraulic cross section of the mixing chamber (6) is at least large enough that the maximum flow rate which can occur in the mixing chamber (6) is less than 0.1 m/s.

15. The inerting system (1) according to one of claims 8 to 14,
wherein a control unit (5) is provided which is designed to control the gas separation system (3.1, 4.1;3.2, 4.2; 3.3, 4.3) as a function of the oxygen content prevailing at the respective moment in the spatial atmosphere of the enclosed room (2) such that the residual oxygen content of the nitrogen-enriched gas mixture provided at the outlet (4a.1; 4a.2; 4a.3) of the gas separation system (3.1, 4.1; 3.2, 4.2; 3.3, 4.3) automatically decreases as the oxygen content in the spatial atmosphere of the enclosed room (2) decreases; and/or
wherein a control unit (5) is provided which is designed to set the volume of the spatial air withdrawn from the room (2) per unit of time and fed to the mixing chamber (6) and the volume of fresh air mixed with the withdrawn room air per unit of time as a function of the oxygen content prevailing at that respective moment in the spatial atmosphere of the enclosed room (2) such that the initial gas mixture provided by the mixing chamber (6) exhibits a predefinable oxygen content which is dependent on the oxygen content prevailing in the spatial atmosphere of the enclosed room (2) at that respective moment; and/or
wherein a control unit (5) is further provided which is designed to control the controllable components of the inerting system (1) so as to realize the inerting method according to one of claims 1 to 7.

## Revendications

1. Procédé d'inertisation pour la prévention des incendies et/ou l'extinction des incendies, dans lequel on établit et on maintient dans l'atmosphère d'un local fermé (2) une teneur en oxygène prédéfinissable et réduite par rapport à l'air environnant normal, le procédé présentant les étapes suivantes :
- on met à disposition, dans une chambre de mélange (6), de préférence dans une chambre de mélange (6) réalisée sous la forme d'un tube de mélange, un mélange gazeux initial qui contient de l'oxygène, de l'azote et le cas échéant d'autres composants ;
- on sépare, dans un système de séparation de gaz (3.1, 4.1 ; 3.2, 4.2 ; 3.3, 4.3), au moins une partie de l'oxygène du mélange gazeux initial mis à disposition et on met à disposition de cette façon à la sortie (4a.1 ; 4a.2 ; 4a.3) du système de séparation de gaz (3.1, 4.1 ; 3.2, 4.2 ; 3.3, 4.3) un mélange gazeux enrichi en azote ; et
- on conduit le mélange gazeux enrichi en azote dans l'atmosphère du local fermé (2),
procédé dans lequel, pour mettre à disposition le mélange gazeux initial, une partie de l'air ambiant contenu dans le local fermé (2) est prélevée du local (2) de manière réglée à l'aide d'un dispositif ventilateur (11) prévu dans un système de conduite de retour (9) reliant le local fermé (2) à la chambre de mélange (6) et amenée à la chambre de mélange (6), et de l'air frais est mélangé de manière réglée à la partie d'air ambiant prélevée à l'aide d'un dispositif ventilateur (10) prévu dans un système de conduite d'alimentation en air frais (8) relié à la chambre de mélange (6).

2. Procédé d'inertisation selon la revendication 1,
dans lequel le dispositif ventilateur (11) prévu dans le système de conduite de retour (9) est commandé de telle sorte que la quantité d'air ambiant prélevée du local (2) par unité de temps et amenée à la chambre de mélange (6) soit réglée de façon que la différence entre la pression régnant dans la chambre de mélange (6) et la pression atmosphérique extérieure ne dépasse pas une valeur seuil supérieure prédéfinie ou prédéfinissable ni ne descende au-dessous d'une valeur seuil inférieure prédéfinie ou prédéfinissable, la valeur seuil supérieure pour la pression différentielle étant de préférence de 1,0 mbar et plus préférentiellement de 0,5 mbar, et la valeur seuil inférieure pour la pression différentielle étant de préférence de 0 mbar ;
et/ou
dans lequel le dispositif ventilateur (10) prévu dans le système d'alimentation en air frais (8) est commandé de telle sorte que la quantité d'air frais mélangée par unité de temps à la partie d'air ambiant prélevée soit réglée de façon que la différence entre la pression régnant dans la chambre de mélange (6) et la pression atmosphérique extérieure ne dépasse pas une valeur seuil supérieure prédéfinie ou prédéfinissable ni ne descende au-dessous d'une valeur seuil inférieure prédéfinie ou prédéfinissable, la valeur seuil supérieure pour la pression différentielle étant de préférence de 1,0 mbar et plus préférentiellement de 0,5 mbar, et la valeur seuil inférieure pour la pression différentielle étant de préférence de 0 mbar.

3. Procédé d'inertisation selon la revendication 1 ou 2,
dans lequel le dispositif ventilateur (10) prévu dans le système de conduite d'alimentation en air frais (8) est commandé de telle sorte que la quantité d'air ambiant prélevée du local (2) par unité de temps soit identique à la quantité de mélange gazeux enrichi en azote qui est conduite par unité de temps dans l'atmosphère ambiante du local fermé (2).

4. Procédé d'inertisation selon l'une des revendications 1 à 3,
dans lequel la teneur résiduelle en oxygène du mélange gazeux enrichi en azote varie en fonction de la teneur en oxygène régnant actuellement dans l'atmosphère ambiante du local fermé (2), la teneur résiduelle en oxygène du mélange gazeux enrichi en azote étant de préférence réduite lorsque la teneur en oxygène de l'atmosphère ambiante du local fermé (2) diminue ; et/ou la teneur résiduelle en oxygène du mélange gazeux enrichi en azote étant de préférence réglée selon une courbe caractéristique préalablement déterminée, la courbe caractéristique indiquant de préférence la valeur optimisée du point de vue du temps de la teneur résiduelle en oxygène du mélange gazeux enrichi en azote par rapport à la teneur en oxygène de l'atmosphère ambiante du local fermé (2), selon laquelle le procédé d'inertisation permet de régler en un minimum de temps une teneur en oxygène prédéfinissable et réduite par rapport à l'air environnant normal dans l'atmosphère ambiante du local fermé (2).

5. Procédé d'inertisation selon la revendication 4,
dans lequel la teneur en oxygène régnant actuellement dans l'atmosphère ambiante du local fermé (2) est mesurée directement ou indirectement en continu ou à des moments et/ou événements prédéfinis, et dans lequel la teneur résiduelle en oxygène du mélange gazeux enrichi en azote est réglée en continu ou à des moments et/ou événements prédéfinis à une valeur préalablement définie, à laquelle le procédé d'inertisation permet de réduire la teneur en oxygène de l'atmosphère ambiante du local fermé en un minimum de temps d'un montant de réduction prédéfini à la teneur en oxygène actuelle respective.

6. Procédé d'inertisation selon l'une des revendications 1 à 5,
dans lequel la teneur en oxygène du mélange gazeux initial, hors duquel au moins une partie de l'oxygène est séparée, varie en fonction de la teneur en oxygène régnant actuellement dans l'atmosphère ambiante du local fermé (2).

7. Procédé d'inertisation selon l'une des revendications 1 à 6,
dans lequel le système de séparation de gaz (3.1, 4.1 ; 3.2, 4.2 ; 3.3, 4.3) présente au moins un générateur d'azote (4.3) réalisé sous la forme d'un générateur avec adsorption par alternance pression/vide, lequel présente au moins une entrée, ladite au moins une entrée étant reliée au choix, via un système de conduite (17.3), au côté pression d'un compresseur (3.3) ou au côté aspiration d'une source de vide (V),
dans lequel, pendant une phase de désorption du générateur d'azote (4.3) réalisé sous la forme d'un générateur avec adsorption par alternance pression/vide, de préférence ladite au moins une entrée du générateur d'azote (4.3) est reliée au côté aspiration de la source de vide (V) ; et/ou
dans lequel, de préférence, au moins une entrée du générateur d'azote (4.3) réalisé sous la forme d'un générateur avec adsorption par alternance pression/vide est reliée au choix, via un système de conduite (42), à la chambre de mélange (6), et dans lequel, plus préférentiellement, ladite au moins une entrée du générateur d'azote (4.3) réalisé sous la forme d'un générateur avec adsorption par alternance pression/vide, pour terminer une phase de désorption du générateur d'azote (4.3), est reliée à la chambre de mélange (6) via le système de conduite (42).

8. Installation d'inertisation (1) pour régler et/ou maintenir une teneur en oxygène de l'atmosphère ambiante d'un local fermé (2) prédéfinissable et réduite par rapport à l'air environnant normal, laquelle installation d'inertisation présente un système de séparation de gaz (3.1, 4.1 ; 3.2, 4.2 ; 3.3, 4.3), avec laquelle on sépare d'un mélange gazeux initial contenant de l'azote et de l'oxygène au moins une partie de l'oxygène et on met de cette façon à disposition à la sortie (4a.1 ; 4a.2 ; 4a.3) du système de séparation de gaz (3.1, 4.1 ; 3.2, 4.2 ; 3.3, 4.3) un mélange gazeux enrichi en azote, et laquelle installation d'inertisation (1) présente un système de conduite d'alimentation (7) pour amener le mélange gazeux enrichi en azote au local fermé (2),
dans laquelle est prévue en outre une chambre de mélange (6), de préférence une chambre de mélange (6) réalisée sous la forme d'un tube de mélange, pour mettre à disposition le mélange gazeux initial, dans laquelle un premier système de conduite (9) débouche dans la chambre de mélange (6), via lequel une partie de l'air ambiant contenu dans le local fermé (2) est prélevée du local (2) et amenée à la chambre de mélange (6), et dans laquelle un deuxième système de conduite (8) débouche dans la chambre de mélange (6), via lequel de l'air frais est amené à la chambre de mélange (6),
**caractérisée en ce que**
l'installation d'inertisation (1) présente en outre dans le premier système de conduite (9) un premier dispositif ventilateur (11) pouvant être commandé par un dispositif de commande (5) et dans le deuxième système de conduite (8) un deuxième dispositif ventilateur (10) pouvant être commandé par le dispositif de commande (5).

9. Installation d'inertisation (1) selon la revendication 8,
dans laquelle le dispositif de commande (5) est conçu pour commander le premier dispositif ventilateur (11) de telle sorte que la quantité d'air ambiant prélevée du local (2) par unité de temps à l'aide du premier dispositif ventilateur (11) et amenée à chambre de mélange (6) soit réglée de façon que la différence entre la pression régnant dans la chambre de mélange (6) et la pression atmosphérique extérieure ne dépasse pas une valeur seuil supérieure prédéfinie ou prédéfinissable ni ne descende au-dessous d'une valeur seuil inférieure prédéfinie ou prédéfinissable ; et/ou
dans laquelle le dispositif de commande (5) est conçu pour commander le deuxième dispositif ventilateur (10) de telle sorte que la quantité d'air frais mélangée par unité de temps à l'aide du deuxième dispositif ventilateur (10) à la partie d'air ambiant prélevée soit réglée de façon que la différence entre la pression régnant dans la chambre de mélange (6) et la pression atmosphérique extérieure ne dépasse pas une valeur seuil supérieure prédéfinie ou prédéfinissable ni ne descende au-dessous d'une valeur seuil inférieure prédéfinie ou prédéfinissable ; et/ou
dans laquelle est prévu en outre un dispositif de commande (5) qui est conçu pour commander le système de séparation de gaz (3.1, 4.1 ; 3.2, 4.2 ; 3.3, 4.3) de telle sorte que la teneur résiduelle en oxygène du mélange gazeux enrichi en azote varie en fonction de la teneur en oxygène régnant actuellement dans l'atmosphère ambiante du local fermé (10).

10. Installation d'inertisation (1) selon la revendication 8 ou 9,
dans lequel est prévu en outre dans le premier système de conduite (9) un premier dispositif ventilateur (11) pouvant être commandé par un dispositif de commande (5) et dans le deuxième système de conduite (8) un deuxième dispositif ventilateur (10) pouvant être commandé par le dispositif de commande (5), le dispositif de commande (5) étant conçu pour commander le premier et/ou deuxième dispositif ventilateur (10, 11) de telle sorte que la quantité d'air ambiant prélevée du local (2) par unité de temps soit identique à la quantité de mélange gazeux enrichi en azote qui est amenée par unité de temps à l'atmosphère ambiante du local fermé (2).

11. Installation d'inertisation (1) selon l'une des revendications 8 à 10,
dans laquelle est prévue en outre une section de mélange (12) intégrée dans la chambre de mélange (6) ou placée en amont de la chambre de mélange (6), dans laquelle le premier et le deuxième système de conduite (9, 8) débouchent de préférence via une pièce en Y, la section de mélange (12) étant configurée, en particulier en ce qui concerne sa section transversale d'écoulement effective, de façon qu'un écoulement turbulent s'établisse dans la section de mélange (12), la section de mélange (12) présentant de préférence une longueur qui est au moins le quintuple du diamètre hydraulique de la section de mélange (12).

12. Installation d'inertisation (1) selon l'une des revendications 8 à 11,
dans laquelle le système de séparation de gaz (3.1, 4.1 ; 3.2, 4.2 ; 3.3, 4.3) présente au moins un et de préférence une pluralité de générateurs d'azote (4.1, 4.2, 4.3) associés chacun à un compresseur (3.1, 3.2, 3.3) relié à la chambre de mélange (6) via un système de conduite (17.1, 17.2, 17.3),
dans laquelle de préférence sur ledit au moins un et plus préférentiellement sur chaque générateur d'azote (3.1, 3.2, 3.3), la teneur résiduelle en oxygène du mélange gazeux mis à disposition à la sortie (4a.1, 4a.2, 4a.3) du générateur d'azote (3.1, 3.2, 3.3) et enrichi en azote peut être réglée à l'aide d'un dispositif de commande (5).

13. Installation d'inertisation (1) selon la revendication 12,
dans laquelle ledit au moins un générateur d'azote (4.3) est réalisé sous la forme d'un générateur avec adsorption par alternance pression/vide,
et dans laquelle est prévue au moins une source de vide (V) à laquelle au moins une entrée du générateur d'azote (4.3) réalisé sous la forme d'un générateur avec adsorption par alternance pression/vide peut être reliée ; et/ou dans laquelle ledit au moins un générateur d'azote (4.3) est réalisé sous la forme d'un générateur avec adsorption par alternance pression/vide et l'installation d'inertisation (1) présente en outre un système de conduite (42) via lequel au moins une entrée du générateur d'azote (4.3) réalisé sous la forme d'un générateur avec adsorption par alternance pression/vide peut être reliée à la chambre de mélange (6).

14. Installation d'inertisation (1) selon l'une des revendications 8 à 13,
dans laquelle la chambre de mélange (6) présente un volume qui dépend du nombre de générateurs d'azote (4.1, 4.2, 4.3) utilisés dans l'installation d'inertisation (1) et/ou du principe sur lequel le fonctionnement dudit au moins un générateur d'azote (4.1, 4.2, 4.3) est basé ; et/ou
dans laquelle la section transversale hydraulique de la chambre de mélange (6) est au moins assez grande pour que la vitesse d'écoulement maximale pouvant apparaître dans la chambre de mélange (6) soit en moyenne inférieure à 0,1 m/s.

15. Installation d'inertisation (1) selon l'une des revendications 8 à 14,
dans laquelle est prévu un dispositif de commande (5) qui est conçu pour, en fonction de la teneur en oxygène régnant actuellement dans l'atmosphère ambiante du local fermé (2), commander le système de séparation de gaz (3.1, 4.1 ; 3.2, 4.2 ; 3.3, 4.3) de telle sorte que la teneur résiduelle en oxygène du mélange gazeux mis à disposition à la sortie (4a.1 ; 4a.2 ; 4a.3) du système de séparation de gaz (3.1, 4.1 ; 3.2, 4.2 ; 3.3, 4.3) et enrichi en azote soit automatiquement réduite lorsque la teneur en oxygène de l'atmosphère ambiante du local fermé (2) diminue ; et/ou
dans laquelle est prévu un dispositif de commande (5) qui est conçu pour, en fonction de la teneur en oxygène régnant actuellement dans l'atmosphère ambiante du local fermé (2), régler la quantité d'air ambiant prélevée du local (2) par unité de temps et amenée à la chambre de mélange (6) et la quantité d'air frais mélangée par unité de temps à la partie prélevée d'air ambiant de telle sorte que le mélange gazeux initial mis à disposition par la chambre de mélange (6) présente une teneur en oxygène dépendant de la teneur en oxygène régnant actuellement dans l'atmosphère ambiante du local fermé (2) et prédéfinissable ; et/ou
dans laquelle est prévu en outre un dispositif de commande (5) qui est conçu pour commander les composants commandables de l'installation d'inertisation (1) de telle sorte qu'un procédé d'inertisation selon l'une des revendications 1 à 7 soit réalisable.
